(19) Europäisches Patentamt
European Patent Office
Office européen des brevets

(11) **EP 1 665 703 B1**

(12) **EUROPEAN PATENT SPECIFICATION**

(45) Date of publication and mention
of the grant of the patent:
**16.01.2008 Bulletin 2008/03**

(51) Int Cl.:
*H04L 27/26* (2006.01)   *H04B 7/06* (2006.01)
*H04L 1/06* (2006.01)

(21) Application number: **03753414.6**

(22) Date of filing: **15.09.2003**

(86) International application number:
**PCT/EP2003/010240**

(87) International publication number:
**WO 2005/029801 (31.03.2005 Gazette 2005/13)**

(54) **MULTICARRIER SYSTEM WITH TRANSMIT DIVERSITY**

MEHRTRÄGERSYSTEM MIT SENDEDIVERSITÄT

SYSTEME MULTIPORTEUSE AVEC DIVERSITE DE TRANSMISSION

(84) Designated Contracting States:
**DE GB**

(43) Date of publication of application:
**07.06.2006 Bulletin 2006/23**

(73) Proprietor: **NTT DoCoMo, Inc.**
**Tokyo (JP)**

(72) Inventors:
• **BAUCH, Gerhard**
**80799 München (DE)**
• **MALIK, Javed, Shamim**
**81377 München (DE)**

(74) Representative: **Zinkler, Franz et al**
**Schoppe, Zimmermann, Stöckeler & Zinkler**
**Postfach 246**
**82043 Pullach bei München (DE)**

(56) References cited:
**WO-A-02/25857**

• **YE LI ET AL: "Clustered OFDM with channel estimation for high rate wireless data" MOBILE MULTIMEDIA COMMUNICATIONS, 1999. (MOMUC '99). 1999 IEEE INTERNATIONAL WORKSHOP ON SAN DIEGO, CA, USA 15-17 NOV. 1999, PISCATAWAY, NJ, USA,IEEE, US, 15 November 1999 (1999-11-15), pages 43-50, XP010370695 ISBN: 0-7803-5904-6**
• **SAYANA K ET AL: "A concatenated coded multiplexing scheme for multiuser OFDM downlink" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY: IEEE, US, vol. 1 OF 5, 11 May 2003 (2003-05-11), pages 2847-2851, XP010642965 ISBN: 0-7803-7802-4**
• **TONELLO A M ET AL: "Analysis of the uplink of an asynchronous multi-user DMT OFDMA system impaired by time offsets, frequency offsets, and multi-path fading" VEHICULAR TECHNOLOGY CONFERENCE FALL 2000. IEEE VTS FALL VTC2000., vol. 3, 24 September 2000 (2000-09-24), pages 1094-1099, XP010524673**
• **DAMMANN A ET AL: "Low complex standard conformable antenna diversity techniques for OFDM systems and its application to the DVB-T system" ITG FACHBERICHTE, VDE VERLAG, BERLIN, DE, no. 170, 28 January 2002 (2002-01-28), pages 253-259, XP002255841 ISSN: 0932-6022 cited in the application**

## Description

The present invention is in the field of telecommunications and, in particular, in the field of multi-carrier transmission scheme in a multi-user scenario.

In wireless communications, transmit diversity techniques are used in order to mitigate the detrimental effects of fading. A simple transmit diversity technique is delay diversity where the same signal is transmitted from multiple antennas with different delay. This results in an equivalent of input channel with increased frequency selectivity, and therefore, increased frequency diversity - compared to the original sub-channel from each transmit to each receive antenna. In a orthogonal frequency division multiplexing (OFDM), frequency diversity introduced in a transmitter can be exploited by a forward error correcting decoder arranged in a receiver.

However, introducing additional delay in multicarrier transmission systems, which is often required for achieving a time diversity, requires a longer guard interval which, consequently, results in a reduced bandwidth efficiency. If the guard interval is not sufficiently long, inter-carrier interference may occur. However, increasing the length of the guard interval results in a reduced bandwidth efficiency, since the guard interval cannot be applied to information transmission.

An increased frequency selectivity without exceeding the guard interval can be achieved introducing a cyclic delay diversity, as described in: A. Dammann and S. Kaiser, "Standard conformable antenna diversity techniques for OFDM systems and its application to the DVB-T system", IEEE Globecom, pages 3100-3105, November 2001, in: A. Dammann and S. Kaiser, "Low complex standard conformable antenna diversity techniques for OFDM systems and its application to the DVB-T system", 4th International ITG Conference on Source and Channel Coding, pages 253-259, January 2002, and in: A. Dammann, R. Raulefs, and S. Kaiser, "Beamforming in combination with space-time diversity for broadband OFDM systems", IEEE Conference on Communications (ICC), pages 165-171, April 2002. In accordance with the teachings of the above documents, a delay is introduced in a cyclic manner such that the guard interval is not exceeded.

Transmit diversity techniques are traditionally applied in a multi-user scenario in order to transmit a signal through a plurality of channels, wherein the transmit signal comprises a plurality of signal streams associated with a plurality of users. At a receiver, the user streams are separated by explicitly exploiting the transmit diversity provided by a processing of the transmit signal.

In order to generate transmit diversity, cyclic delay diversity may be applied for transmitting data simultaneously from different transmit antennas, wherein each data stream associated with a transmit antenna has a delay with respect to the other data streams. At the receiver, a single receive antenna or a plurality of receive antennas can be applied.

In order to efficiently exploit the available bandwidth, the characteristics of the applied transmit diversity technique should be taken into account for effectively exploiting the full spatial diversity. For example in a multi-carrier transmissions scenario, the applied transmit diversity technique may have an influence on correlation properties between sub-carriers at the receiver. As mentioned before, the spatial diversity can be transformed into the frequency diversity which is can be picked up by the decoder.

The paper entitled " Clustered OFDN with channel estimation for High Rate Wireless Data", by Ye Li et al. (MOMUC 99), discloses an OFDMA scheme where each user utilizes several clusters of tones at different locations of a wideband channel.

In a broadband orthogonal frequency division multiple access system (OFDMA), the available bandwidth is shared by several users. Usually, a block frequency interleaver is applied, i.e. the transmit symbols of a user are assigned to sub-carriers with an equal spacing in order to exploit frequency diversity such that neighbouring sub-carriers are allocated to different users. However, in combination with the previously mentioned cyclic delay diversity, where spatial diversity is reflected in uncorrelated channel coefficients of neighbouring sub-carriers, and hence in uncorrelated carriers, a frequency block interleaving may result in a complete failure to exploit spatial diversity. Hence, the available bandwidth is not efficiently exploited, since, for a user stream, an increased bit error rates occurs after decoding.

In order to improve the system's performance, a more complex coding scheme may be applied for coding the different user streams by introducing an increased redundancy. However, this approach suffers form the fact, that the increased redundancy reduces the bandwidth efficiency. The spatial diversity, when considering the standard diversity techniques, may also be exploited by increasing a number of transmit and receive antennas. However, especially in a multi-user scenario, the increased number of receive antennas would increase the complexity of the overall system, in particular a complexity of a mobile receiver.

A further possibility of improving the systems performance of a conventional multi-carrier transmission system using diversity techniques is to increase a length of a guard interval in order to reduce interferences. However, this approach suffers from a reduced bandwidth efficiency.

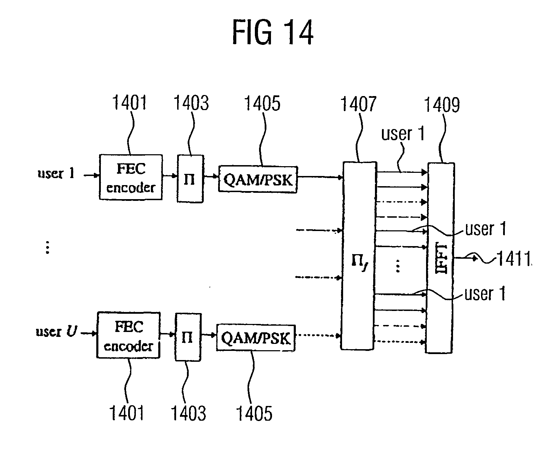

Fig. 14 shows a conventional OFDMA system (OFDMA = orthogonal frequency division multiple access). The OFDMA system of Fig. 14 comprises a plurality of FEC encoders 1401 having an input and an output, wherein the respective outputs of the plurality of the FEC encoders 1401 are connected to a plurality of interleavers 1403. Each of the plurality of the interleavers 1403 has an output connected to an associated mapper 1405 for mapping the discrete values provided by the respective interleaver 1403 on signals space representatives according to a chosen signal space constellation scheme (modulation). In Fig. 14, the mapper 1405 performs for example a QAM (QAM = quadrate amplitude modulation) or PSK (PSK = phase shift keying) modulation. Each of the plurality of mappers 1405 has an output connected to a interleaver 1407 having a plurality of outputs connected to a IFFT block 1409 in (IFFT = inverse fast Fourier transform). The IFFT block 1409 has a plurality of outputs 1411 for providing a multi-carrier modulated signal.

Each of the FEC encoders 1401 receives a corresponding user signal, wherein in Fig. 14 user 1 and user U are depicted. In a conventional OFDMA system of Fig. 14, the available sub-carriers are allocated to a particular user by using the interleaver 1407 for distributing the symbols of a user signal on sub-carriers with a fixed spacing in order to exploit diversity. If cyclic delay diversity is applied, such a block interleaving may introduces an error since the correlation properties of sub-carries are not taken into account. In Fig. 14, the sub-carriers s = 0, 3, 7, ... are allocated to user 1. However, user 1 can not completely pick up the spatial diversity, when the applied spatial diversity technique introduces a correlation between the carriers allocated to user 1. A further disadvantage of the system of Fig. 14 is that the frequency selectivity of the channel can not be taken into account since a fixed allocation scheme is used. Therefore, the conventional OFDMA systems do not fully exploit the frequency diversity which results in a reduced performance with respect to bandwidth efficiency.

It is the object of the present invention to provide a concept for an efficient multi-user multi-carrier transmission scheme.

This object is achieved by an apparatus for providing a multi-carrier modulated signal in accordance with claim 1 or by an apparatus for generating a first and a second transmit signal in accordance with claim 15 or by an apparatus for extracting values corresponding to a first user signal in accordance with claim 19 or by a method for providing a multi-carrier modulated signal in accordance with claim 32 or by a method for generating a first and a second transmit signal in accordance with claim 33 or by a method for extracting values corresponding to a first user signal in accordance with claim 34 or by a computer program in accordance with claim 35.

The present invention is based on finding, that, in a multi-carrier transmission scenario, a multi-user transmission using diversity techniques can efficiently be performed by explicitly exploiting the correlation properties of the sub-carriers used by the multi-carrier modulation scheme. In particular, it has been found that the spatial diversity can efficiently be exploited when a number of values corresponding to a first user signal is assigned to a set of carrier frequencies so that, at the receiver, respective neighbouring carriers are uncorrelated. When cyclic delay diversity scheme is used, then the cyclic delays may be chosen such that a set of successive carriers is employed for transmitting the first user signal, and a second set of successive carriers is employed for transmitting a second user signal, provided that the respective neighbouring sub-carriers are uncorrelated.

In accordance with the present invention, each user signal values of a plurality of users are allocated to a predetermined sub-carriers, for example to a set of successive carriers or to a plurality sets of successive carriers. Hence, each user signal is allocated to one or to several sets of carriers (carrier frequencies), each set or a number of successive carriers, wherein two neighbouring carriers are uncorrelated. When using cyclic delay diversity as a spatial diversity scheme for multi-user transmission, the spatial diversity is transformed into frequency diversity at the receiver and can fully be exploited since the respective two neighbouring carriers allocated to a respective user signals are uncorrelated. Simultaneously, also frequency diversity can also be exploited, since the sets of carriers allocated to one user or to a plurality of users can be placed within the available bandwidth independently.

Moreover, depending on the channel characteristics, for example channel attenuation, the discrete values of a user signal can interleaved or coded prior to being allocated to the respective set of successive carriers. In this way, each set of carriers may be adapted to the channel characteristics freely an independently. Therefore, at the receiver, the frequency diversity can fully be exploited.

It is an advantage of the present invention, that the spatial diversity can fully be exploited for simultaneously transmitting a plurality of multi-user signals without increasing the receiver's complexity. Furthermore, even a single antenna can be used at the receiver, since spatial diversity is transformed into frequency selectivity ba the inventive carrier allocation scheme. Therefore, a number of received signals to be processed can be reduced, which yields a reduction of signal processing resources required for fetching the corresponding user signal.

It is a further advantage of the present invention that a user signal can be allocated to different sub-carriers such that each user can exploit frequency diversity and spatial diversity, simultaneously.

In accordance with the present invention, the cyclic delay may be chosen such that neighbouring sub-carriers are uncorrelated. An interleaving strategy ensures that the full spatial diversity can be exploited using forward error correction codes of limited constrained length.

It is a further advantage of the present invention, that the inventive carrier allocation scheme is simple, so that neither a complicated, i.e. recursive computations nor time consuming system adaptation is required.

The present invention provides further an interleaving strategy which guarantees that the maximum possible diversity advantage over the standard approach is obtained. The inventive interleaving scheme has low complexity, since the decision with respect to the carriers to be allocated is derived upon evaluation of channel characteristics, which, usually, are known in the multi-carrier receiver.

In order to guarantee en efficient exploitation of the spatial diversity also in frequency selective channels with unknown delay spread, the cyclic delay may be adapted in order to achieve the required low correlation property between sub-carriers. The inventive cyclic delay scheme cause that the effective channel coefficients of neighbouring sub-carriers have a low correlation whereas not neighbouring sub-carriers may have high correlation, so that full spatial diversity can efficiently be exploited.

Further embodiments of the present invention are described in detail with respect to the following Fig. s, in which:

Fig. 1     shows a block diagram of an inventive apparatus for providing a multi-carrier modulated signal in accordance with a first embodiment of the present invention;

Fig. 2     shows a block diagram of an apparatus for providing a multi-carrier modulated signal in accordance with a further embodiment of the present invention;

Fig. 3     shows a block diagram of an apparatus for providing a multi-carrier modulated signal in accordance with a further embodiment of the present invention;

Fig. 4     demonstrates the inventive carrier allocation scheme;

Fig. 5     demonstrates cyclic delay diversity in a coded OFDM (transmitter);

Fig. 6     demonstrates cyclic delay diversity in a coded OFDM (receiver);

Fig. 7A     demonstrates a fading channel and the corresponding encoded error rate;

Fig. 7B     shows the channel of Fig. 7a transformed by cyclic delay diversity and the corresponding encoded error rate;

Fig. 8A     shows a model of a communication channel;

Fig. 8B     shows an equivalent SIMO channel model using cyclic delay diversity;

Fig. 8C     shows an equivalent SIMO channel model using a further cyclic diversity;

Fig. 9     shows a channel frequency response;

Fig. 10     demonstrates a correlation function for cyclic delay diversity with two transmit antennas in accordance with the present invention;

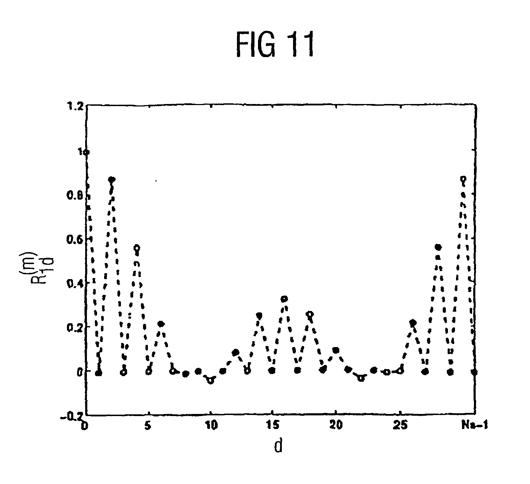

Fig. 11     shows a correlation function for cyclic delay diversity using two transmit antennas in the case of a frequency selective channel;

Fig. 12     shows an apparatus for generating a first and a second transmit signal in accordance with the present invention;

Fig. 13     shows a block diagram of an apparatus for extracting values in accordance with the present invention;

Fig. 14     shows a block diagram of a conventional OFDM scheme.

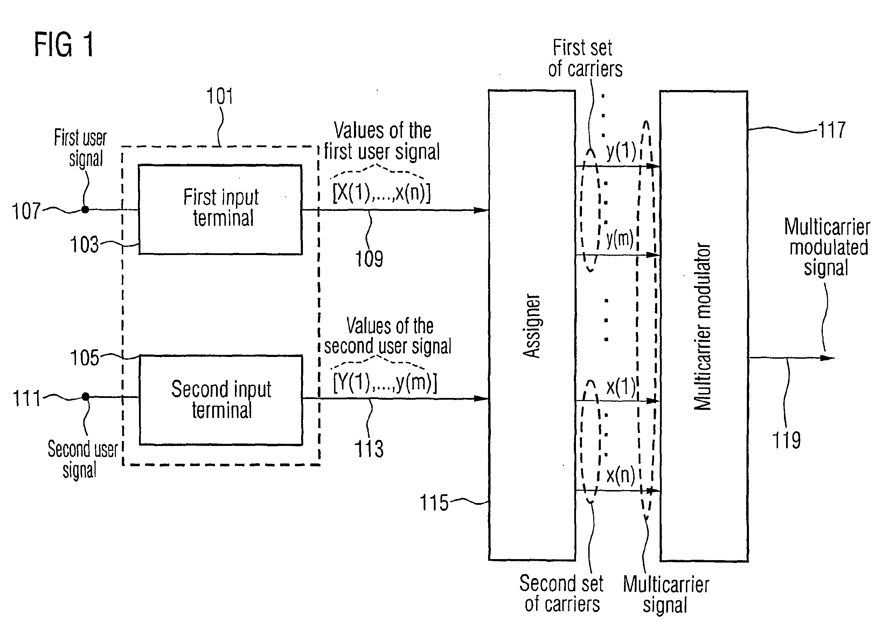

Fig. 1 shows a block diagram of an inventive apparatus providing a multi carrier modulated signal from a first user signal and from a second user signal in accordance with a first embodiment of the present invention.

The apparatus of Fig. 1 comprises an input 101 for receiving the first user signal and receiving the second user signal. The input 101 comprises a first input terminal 103 and a second input terminal 105, both arranged in parallel. The first input terminal 103 has an input 107 for receiving the first user signal and an output 109 for outputting values of the first user signal. The second input terminal 105 has an input 111 for receiving the second user signal and an output 113 for outputting values of the second user signal.

The outputs 109 of the first input terminal 103 and 113 of the second input terminal 115 are coupled in parallel to an assigner 115. The assigner 115 has a plurality of outputs coupled to a multi-carrier modulator 117 having an output 119 for outputting a multi-carrier modulated signal.

Fig. 1 demonstrates the inventive approach, wherein two users of a plurality of users is depicted. The first user signal provided to the first input terminal 103 is associated with a first user and the second user signal provided to the second input terminal 105 is associated with a second user. The term "user" describes a scenario, where the user signals are assigned to physical entities. Alternatively, the term "user" may define a scenario, where the different user signals are associated with different services, for example an e-mail or a video stream, to be transmitted. The first input terminal 103 operates only on the first user signal, and the second input terminal 105 operates only on the second user signal. In other words, the different signal streams associated with different user signals are separately processed and the processing is performed in a parallel manner.

The first input terminal 103 receives the first user signal and outputs values or processed values of the first user signal denoted by [x(1),..., x(n)], where n denotes a number of values or processed values of the first user signal. The second input terminal 105 operates similarly. The second user signal is transformed into values of the second user signal denoted by [y(1),...,y(m)], wherein m denotes a number of values of the second user signal or the number of processed values of the second user signal. For the sake of generality, it is assumed, that the number of values of the first user signal or the number of values of the processed first user signal provided by the first input terminal 103 differs from the number of values or processed values of the second user signal provided by the second input terminal 105. The values of the first user signal and the values of the second user signal (or processed versions thereof) are provided to the assigner 115 which is operative for assigning the values of the first user signal or processed version thereof to a first set of carriers having successive carrier frequencies and for assigning values of the second user signal or processed values of the second user signal to a second set of carrier having successive carrier frequencies. The successive carrier frequencies are determined by a number of carriers used by the underlying multi-carrier modulation scheme. The number of carriers defines in available bandwidth for signal transmission.

The assigner 115 is operative to allocate the first set of carriers and the second set of carrier independently within the available bandwidth. As is depicted in Fig. 1, the values of the second user signal are assigned to the first set of carrier having successive carrier frequencies starting with a first carrier frequency. Contrary thereto, the values of the first user signal are assigned to the second set of carriers having successive carrier frequencies starting with a second carriers frequency, which may be higher or lower than the first carrier frequency. Alternatively, the values of the first user signal may be assigned to the first set of carriers and the values of the second user signal may be assigned to the second set of carriers. The outputs of the assigner provide a multi-carrier signal including values of the first user signal or processed values of the first user signal allocated on successive carrier frequencies of the second set of carriers and the values of the second user signal allocated to successive carrier frequencies of the first set of carriers.

The multi-carrier modulator 117 simultaneously modulates the multi-carrier signal, e.g. the values assigned to the first set of successive carrier frequencies and values assigned to the second set of successive carrier frequencies. After modulation, a multi-carrier modulated signal provided via the output 119. If the multi-carrier modulated signal of Fig. 1 is a base band multi-carrier modulated signal, then the output 119 may be coupled via an analog/digital converter for providing a band pass signal.

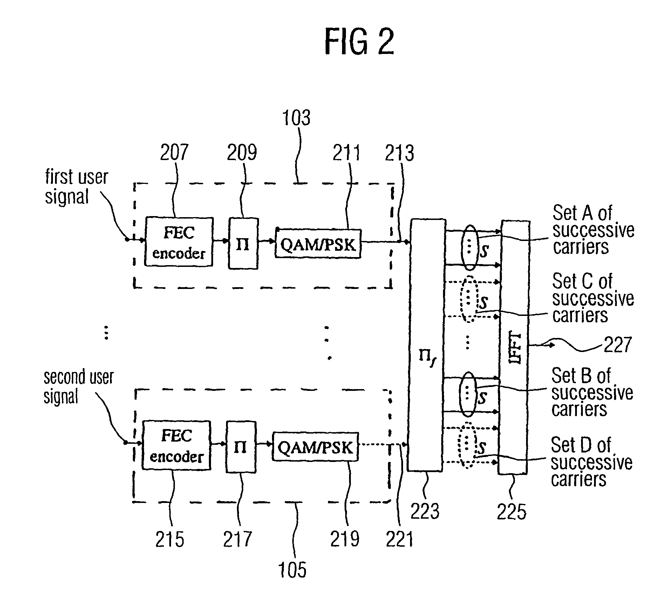

Fig. 2 shows a block diagram of an apparatus for providing a multi-carrier modulated signal in accordance with a further embodiment of the present invention.

In Fig. 2, a multi user scenario with a plurality of users is considered, wherein two user signals are explicitly depicted. The apparatus of Fig. 2 comprises the first input terminal 203 and second input terminal 205 arranged in parallel. The first input terminal 203 comprises a first encoder 207 having an output connected to a first interleaver 209. The first interleaver 209 has an output connected to a mapper 211 having an output 213. The first input terminal determines a first signal path wherein a second signal path, parallel to the first one, is determined by the second input terminal 205.

The second input terminal 205 comprises a second encoder 215 having an input and an output, wherein the output of the second encoder 215 is coupled to a second interleaver 217. The second interleaver 217 has an output coupled to a second mapper 219 having an output 221.

The outputs 213 of the first input terminal and 221 of second terminal, representing the first and the second signal path associated with a first and a second user of a plurality of users, are coupled to an assigner 223. The assigner 223 has a plurality of outputs coupled to a multi-carrier modulator 225 having an output 227.

The first encoder 207 may be a forward error correction encoder (FEC encoder) for encoding the values of the first user signal and for providing the encoded values of the first user signal as the values of the first user signal. The second coder 215 (FEC encoder) is operative for encoding the values of the second user signal to provide the encoded values of the second user signal as the values of the second user signal.

The first coder 207 and the second coder 215 perform an encoding scheme introducing redundancy into the respective user signal. The first and the second coders, 207 and 215, may be operative to perform for example a Reed Salomon (RS) coding or a convolutional coding. The encoded values provided by the first coder 207 are provided to the first interleaver 209 for interleaving the values of the first user signal and for providing the interleaved values of the first user signal as the values of the first user signal.

Accordingly, the second input terminal 205 comprises the second interleaver 217 for interleaving the values of the second user signal in for providing the interleaved of the second user signal as the values of the second user signal. Both interleaver 209 and 217 may be block interleavers.

The first input terminal 203 further comprises the mapper 211 for mapping successive values of the first user signal on a number of successive signal space representatives of a predetermined signal space constellation for obtaining the number of successive signals space representative of the first user signal as processed values of the first user signal. Accordingly, the second input terminal 205 comprises the mapper 219 for mapping successive values of the second user signal on a number of successive signal space representatives of a predetermined signal space constellation to obtain the number of successive signal space representatives of the second user signal as processed values of the second user signal.

The predetermined signal space constellations used by the respective mapper 211 and/or 219 belong to a PSK scheme.

QAM scheme (QAM = quadrature amplitude modulation) or to a PAM scheme (PAM = pulse amplitude modulation). Hence, the successive values of the first user signal provided by the interleaver 209 are firstly divided into a number of groups containing successive values, and, secondly, each group consisting of for example four values is mapped on a signal space representative describing i.e. a phase and a amplitude of a resulting vector in the signal space. Each of the mapper 211 and/or 219 provides the number of successive signal space representatives as the number of processed values of the first user signal and as the number of processed values of the second user signal. If a complex valued signal space constellation, for example QAM, is used, then each processed values may be complex, that means that each processed value contains two values, the first one characterising a real part and the second one characterising an imaginary part of the considered processed value.

It is to be remarked at this point that the interleaver 209 and/or 217 are optional. Also the coders 207 and 215 are optional, since coding an interleaving may be performed somewhere else, so that the first user signal and the second user signal depicted in Fig. 2 are received as already coded and interleaved user signals.

The assigner 223 operates similarly to the assigner 215 of Fig. 2. In addition, the assigner 223 of Fig. 2 assigns processed values provided by the mapper 211 to a plurality of sets of successive carriers, wherein a total number of carriers comprised by the plurality of sets of successive carriers is equal to the number of processed values associated with the first user signal. In Fig. 2, two sets of successive carriers, set A and set B, each of which consisting of successive carriers, are depicted. For example, the assigner 223 is operative to assign a first number of processed values to the carriers of set A and second number of processed values of the first user signal to set B. In order to exploit frequency diversity and to take channel fluctuations into account, set A and set B can freely be placed within the available bandwidth determined by the carrier frequencies of the used multi-carrier modulations scheme. The first number of processed values and the second number of processed values may be different. Alternatively, both numbers of processed values may be equal, so that set A and set B comprise the same number of carrier frequencies.

Accordingly, the assigner 223 allocates a first number of processed values provided by the mapper 219 to, for example set C of successive carriers and a second number of processed values of the second user signal to set D of successive carriers.

Each output of the plurality of outputs of the assigner 223 provides a signal space representative as a processed value to the multi-carrier modulator 225. In case of an OFDM transmission scheme, the multi-carrier modulator 225 is operative to perform an inverse fast Fourier transform (IFFT) in order to transform the frequency domain signal provided by the assigner 223 into a time domain signal provided by the output 227 of the multi-carrier modulator 225. In this case, the time domain signal is the multi-carrier signal to be transmitted. The multi-carrier modulator 225 may be operative to perform an inverse Fourier transform (IFT), an inverse fast Fourier transform (IFFT) or an inverse discrete Fourier transform (IDFT) to obtain the multi-carrier modulated signal.

In order to pick up spatial diversity, the apparatus of Fig. 2 allocates groups of for example S neighbouring sub-carriers to each user, wherein S denotes the first number and the second number when both numbers are equal. The number S of sub-carriers per group is determined by the number of different channel states which will be described later. An additional group-wise frequency interleaving performed by the interleavers 209 and 217 enables an exploitation of frequency diversity due to the frequency selectivity of the channel.

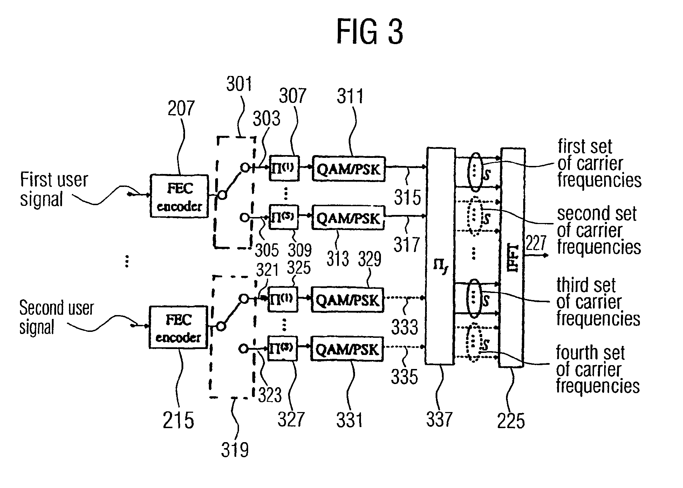

In Fig. 3, an apparatus for providing a multi-carrier signal in accordance with a further embodiment of the present invention is shown. For convenience, components in Fig. 3 that are similar to previously described components are assigned the same reference numerals, and different components are assigned different reference numerals.

Unlike the apparatus of Fig. 2, the apparatus shown in Fig. 3 comprises a first selector 301 coupled to the output of the decoder 307. The selector 301 has a first output 303 and a second output 305. The first output 303 is coupled to a interleaver 307 and the second output 305 is coupled to a further interleaver 309. The interleaver 307 has an output coupled to a mapper 311, and the further interleaver 309 has an output coupled to a further mapper 313. The mapper 311 has an output 315 and the mapper 313 has an output 317.

Accordingly, the output of the decoder 205 is coupled to a second selector 309 having a first output 321 and a second output 303. The first output 321 is coupled to an interleaver 325, and the second output 323 is coupled to an interleaver 327. Each of the interleavers 325 and 327 has an output, wherein the output of the interleaver 325 is coupled to a mapper 329, and wherein the output of the interleaver 327 is coupled to a mapper 331. The mapper 329 has an output 333 and the mapper 331 has an output 335.

The outputs 325, 327, 333 and 335 of the respective mapper are coupled to an assigner 337 having a plurality of outputs coupled to the multi-carrier modulator 225 having the output 227.

The first decoder 207 receives the first user signal and provides decoded first user values as first user values. The first user values are provided to the first selector 301, which is operative for providing a stream of selected values of the first user signal via the first output 303 as the values of the first user signal by selecting every $S^{th}$ value of the first user signal starting with a value having an ordering index and for providing a further stream of selected values of the first user signal as further values of the first user signal via the second output 305 by selecting every $S^{th}$ value of the first user signal starting with a further value having a further ordering index, which is different from the first ordering index.

Accordingly, the second selector 319 provides a stream of selected values of the second user signal as the values of the second user signal by selecting every $S^{th}$ values of the second user signal starting with a value having an ordering index and provides a further stream of selected values of the second user signal as further values of the second user signal by selecting every $S^{th}$ value of first user signal starting with a further value having a further ordering index being different from the ordering index.

In other words, the first selector 301 and the second selector 319 are respectively operative for proving a number of streams of selected values of the first user signal and a number of streams of selected values of the second user signal, respectively, by collecting every $S^{th}$ value of the considered user signal to an associated stream. In Fig. 3, only two streams, namely the stream and the further stream of the values of the first and second user signal are depicted.

For example, the first selector 301 and the second selector 319 are multiplexers.

The stream provided by the first output 303 is interleaved by the interleaver 307, and the further stream provided by the second output 305 is interleaved by the interleaver 309. Accordingly, the stream and the further stream associated with the second user signal are interleaved by the interleaver 325 and the further interleaver 327. The interleaver 307 is operative for interleaving the values of the first user signal associated with the stream of values, and the further interleaver 309 is operative for interleaving the further values of the first user signal associated with the further stream. The interleaved values and further values provided by the interleavers 307 and 309 are separately provided to the mapper 311 and 313 as values of the first user signal and as further values of the user signal.

Similar operation is performed by the interleaver 325 and further interleaver 327 associated with a signal path assigned to the second user.

The mappers 311, 313, 329 and 339 are operative to provide a number of successive signal space representatives of the values of the first user signal as processed values of the first user signal, the further values of the first user signal as further processed values of the first user signal, as values of the second user signal as processed values of the second user signal and as further values of the second user signal as further processed values of the second user signal.

It is to be noted that the first input terminal of the apparatus shown in Fig. 3 is constituted by the first selector 301, the interleaver 307 and a further interleaver 309 and by the mapper 311 and the further mapper 313. Accordingly, the second input terminal comprises the second selector 319, the interleaver 325 and the further interleaver 327, the mapper 329 and the further mapper 331. Furthermore, the mapper 311, 313, 329 and 339 operate in the same way as the mapper discussed in connection with embodiment shown in Fig. 2.

The assigner 337 is operative for assigning a number of values of the first user signal (the number of successive signal space representatives provided by the mapper 311) to a first set of carrier frequencies having the number of successive carrier frequencies. Accordingly, the assigner 337 assigns the number of successive further value of the first user signal (the number of successive signals space representatives provided by the mapper 313) to a third set of carrier frequencies comprising the number of successive carriers frequencies. As depicted in Fig. 3, the first set of carrier frequencies and the third set of carrier frequencies, although employed for transmission of the first user signal, are placed independently form each other within the available bandwidth determined by the used carrier frequencies of the underlying multi-carrier modulation scheme.

Accordingly, the assigner 337 assigns the number of values of the second user signal (successive signal space for presentations provided by the mapper 329) to a second set of carrier frequencies comprising the number of successive carrier frequencies. The number of further values of second user signal (the number of successive signal space representatives provided by the mapper 331) is allocated on the number of successive carrier frequencies of the fourth set of carrier frequencies.

At a receiver, for example a convolutional code picks up the maximum diversity, if successive code bits are transmitted via uncorrelated sub-carriers, as discussed in connection with the embodiments shown in Fig. 1,2 and 3. In accordance with the present invention, the stream of code bits is split into S streams. The bits in each stream are optionally interleaved and mapped on constellation elements of a modulation scheme, i.e. QAM. The number S of streams is given by the number of different channel states.

The apparatus shown in Fig. 3 demonstrates a transmitter exploiting the above described inventive concept. The bits of each user are encoded by a forward error correcting code. A serial to parallel converter splits the stream of code bits into S-streams, where S denotes the number of carrier frequencies comprised by a respective set of carrier frequencies. The first bit is assigned to stream 1, the second to stream 2 etc., wherein stream 1 and stream 2 denote the stream and the further stream mentioned before. Within each stream, an optional bit interleaver permutes the code bits before mapping them to constellation elements of a digital modulation method such as for example QAM or PSK. The modulation symbols (signal space representations) are assigned to S neighbouring sub-carriers, where a stream s always assigned to the $S^{th}$ sub-carrier within a group. A spacing between groups of a particular user may be fixed. In this case, the assigner 223 is a group-wise frequency block interleaver. Therefore, the frequency diversity of the original channel is obtained by distributing groups over the entire bandwidth whereas spatial diversity is exploited by allocating the streams within one group (one set) which are transmitted on neighbouring sub-carriers.

Optionally, the assignment performed by the assigner 223 can be changed from one OFDM symbol (multi-carrier modulated signal) to the next. I.e., sub-carriers 0,...,S-1 can be assigned to a first user (user 1) in a first OFDM symbol but to a second user (user 2) in the second OFDM symbol.

The receiver performs inverse operations to those performed by the receiver. For example, the receiver performs the reverse interleaving operations of the transmitter.

As mentioned above, the inventive assigner may further be operative to assign the value associated with the first and/or second user to a respective set of carrier frequencies depending on channel characteristics, for example on a channel transfer function.

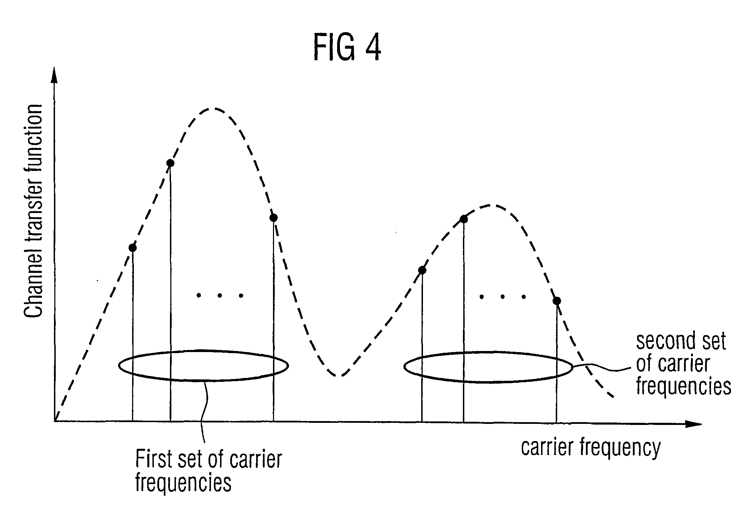

Fig. 4 shows an embodiment of a assignment of the first set of carrier frequencies and of the second set of carrier frequencies to carrier frequencies subject to a channel transfer function, which is depicted as a dashed line in Fig. 4.

The first set of carrier frequencies is allocated within a sub-bandwidth, where the channel transfer function has a low attenuation. Accordingly , the second set of carrier frequencies is allocated within a second sub-bandwidth, where the channel transfer function also has a low attenuation. Between the first and the second sub-bandwidth, the general transfer function is characterised by a significant attenuation. If, for example, a first set of carrier frequencies would be allocated within this bandwidth, then a significant increase of a bit error ratio would result. In order to avoid this scenario, the sets of carrier frequencies may be allocated upon evaluation of a channel information.

In accordance with a further embodiment to the present invention, the inventive apparatus for providing a multi-carrier signal, as for example considered in Fig. s 1 to 4, may further comprise a means for providing channel information with respect to a channel characteristic, for example the channel transfer function, within a bandwidth determined by a number of carriers of the multi-carrier modulation scheme. In this case, the assigner is operative to determine a first carrier frequency of the first set of successive carrier frequencies and/or to determine a first carrier frequency of the second set of successive carrier frequencies on the basis of the channel information.

If the channel transfer function is known, then each sub-bandwidth can be determined by for example thresholding for channel transfer function in order to determine carrier frequencies which are expected to be less disturbed by the channel influence then other carrier frequencies.

As discussed in connection with the embodiment of Fig. 3, the inventive assigner is operative to assign values of the first user signal to the first set of carriers having successive carrier frequencies, to assign further values of a first user signal to a third set of carriers having successive carriers frequencies, to assign values of the second user signal to second set of carrier frequencies and to assign the further values of the second user signal to a fourth set of carrier frequencies having successive carrier frequencies. If a plurality of sets of carriers frequencies are to be assigned to a plurality of sub-bandwidths, then the inventive assigner may exploit the channel information provided by the means for providing channel information for determining the first carrier frequencies of the respective set of successive carrier frequencies of the first, second, third and fourth set of carrier frequencies on the basis of the channel information.

As depicted in Fig. 3, the multi-carrier modulator 225 is operative for simultaneously modulating values assigned to the first set of successive carrier frequencies, to the second set of successive carrier frequencies, to the third set of successive carrier frequencies and to the fourth set of successive carrier frequencies to obtain the multi-carrier modulated signal. Generally speaking, the inventive assigner may assign a plurality of sets containing successive carrier frequencies. This plurality of sets of successive carrier frequencies is, in accordance with the present invention, simultaneously modulated in order to obtain a multi-carrier modulated signal to be transmitted, wherein the multi-carrier modulated signal contain all user streams in a superimposed manner.

In the following, the cyclic approach with respect to the inventive concept will be described in detail, wherein a multiple-input-multiple-output (MIMO) channel with $N_T$ transmit antennas and $N_R$ receive antennas will be considered.

An impulse response from transmit antenna n to receive antenna m at time t is given by the $1 \times N_s$ vector

$$h_t^{(nm)} = \left[ h_t^{(nm)}(0), \ h_t^{(nm)}(1), \ \ldots, \ h_t^{(nm)}(D), \ 0, \ \ldots, \ 0 \right],$$

wherein D denotes a memory of the channel.

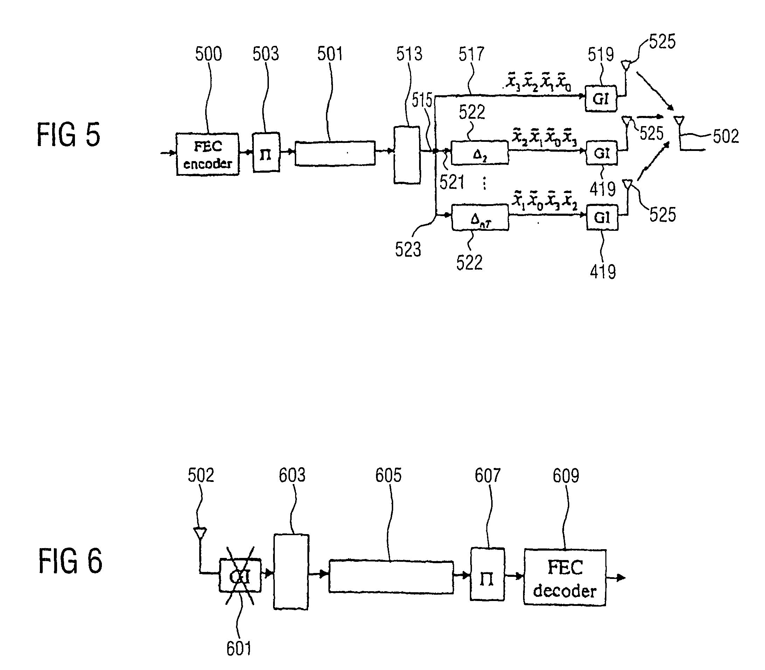

In order to explain the principle of cyclic delay diversity, reference is made to Fig. 5.

The apparatus in Fig. 5 shows the encoder 401 coupled to the interleaver 403. The output of the interleaver 403 is coupled to the inventive apparatus 501 for providing the multicarrier signal. Compared to the embodiment shown in Fig. 4, the inventive apparatus 501 includes the demultiplexer 405, the number of interleavers 407, the number of encoders 409 and the assigner 411. The multi-carrier signal is provided to the transformer 413. The transformed signal is multiplied at the multiplying point 415 into a number of copies of the transformed signal, the number of copies corresponding to the number of transmit antennas 425.

As depicted in Fig. 5, the signal provided via the signal path 417 is identical to the transformed signal provided by the transformer 413. Due to the shift introduced by the means 422, the copy of the transformed signal provided via the signal path 421 is shifted by one coefficient. Accordingly, the copy of the transformed signal corresponding to the signal path 423 is shifted by one coefficient with respect to the shifted copy corresponding to the signal path 421. As depicted in Fig. 5, the means 422 for introducing the delay are respectively operative to perform a left-shift. Alternatively, the means 422 may be operative to perform a right-shift. Moreover, a number of coefficients, the signals are shifted by, is variable and may be greater than 2.

Generally, the data is encoded by for example a forward error correcting encoder FEC 401 and interleaved. After the (optional) interleaver 403, the code bits are modulated, e.g. on QAM (QAM=quadrature amplitude modulation) or PSK (PSK= phase shift keying) symbols. OFDM is then implemented by using the transformer 413 being operative to perform the inverse fast Fourier transform (IFFT) of size $N_S$, where $N_S$ is the number of sub-carriers. The output symbols of the IFFT 413 are denoted by $\tilde{x}_t$, t = 0, ..., $N_s$ - 1. Each antenna introduces a different cyclic delay $\Delta_n$, n = 1, ..., $n_T$, i.e. the transmit symbol from antenna in a time t is given by

$$x_t^{(n)} = \tilde{x}_{(t-\Delta_n) \bmod N_s}, \; t = 0, \ldots, N_s - 1, n = 1, \ldots n_T..$$

Prior to transmission, a cyclic guard interval (GI) is included by the respective means 419 at each transmit antenna.

The system of Fig. 5 is equivalent to the transmission of the sequence $\tilde{x} = {}_L \tilde{x}_0, ..., \tilde{x}_{N_{s-1}}\rfloor$ over a frequency-selective channel with one transmit antenna yet impulse response given by

$$h_{equ,t}^{(1m)} = \left[ h_{equ,t}^{(1m)}(0), \ldots, h_{equ,t}^{(1m)}(N_s - 1) \right]$$

to receive antenna m, m = 1, ..., $n_R$, with

$$h_{equ,t}^{(1m)}(d) = \sum_{n=1}^{n_T} h_t^{(nm)}\big((d - \Delta_n) \bmod N_s\big).$$

As depicted in Fig. 5, the transmit antennas 425 transmit signals to the receive antenna 503 considered above.

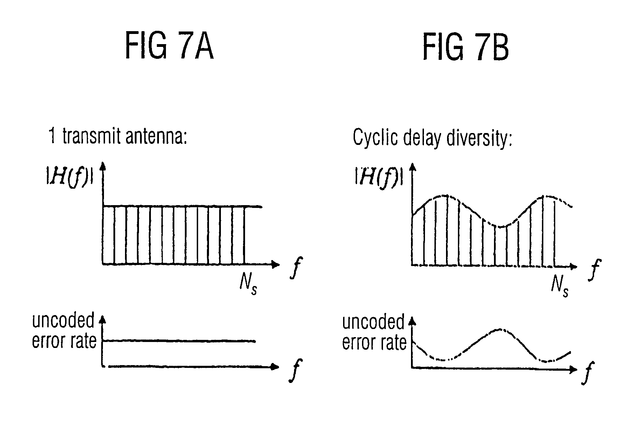

Fig. 6 shows a corresponding OFDM-receiver structure having the receive antenna 503 at which received signals are impinging. The received signals are then provided via a plurality of further processing means not depicted in Fig. 6 to a means 601 for removing the guard interval. The means 601 for removing the guard interval is coupled to a time-frequency transformer 603 inoperative to perform a fast Fourier transform (FFT). The transformed signals at an output of the transformer 603 are provided to a means 605 for demodulating. The means 605 for demodulating is coupled to the interleaver 607 having an output connected to a forward error correction decoder 609. Particularly, the means 605 for demodulating is operative to perform operations inverse to those performed in the transmitter.

Basically, the cyclic delay diversity transforms the multiple-input-multiple-output (MIMO) channel to a single-input-multiple-output (SIMO) channel having an increased frequency selectivity, i.e. the spatial diversity is transformed to frequency diversity. This effect is demonstrated in Fig. 7a and 7b.

In the upper diagram of Fig. 7a, an absolute value of the channel coefficients H(f) over a frequency is shown, wherein a flat fading channel scenario is considered. In the lower diagram of Fig. 7a, a corresponding uncoded error rate over a frequency is depicted. Since in Fig. 7a a flat fading channel is considered, the uncoded error rate follows, by the way of example only, a vertical line over frequency.

In Fig. 7b, the transformation introduced by the cyclic delay diversity is demonstrated.

In the upper diagram of Fig. 7b, an absolute value of the channel coefficients is shown over frequency. Obviously, the channel has been transformed from a flat fading channel to a frequency selective channel having coefficients with increased energy and coefficients with decreased energy. The corresponding uncoded error rate is shown in the lower diagram of Fig. 7b. As can be seen, the uncoded (bit) error rate is not constant over the sub-carriers. However, the average bit error rate for an uncoded transmission will be the same as in the case of a flat fading channel considered in Fig. 7a. Nevertheless, an outer forward error correction decoder can pick up the available frequency diversity.

The inventive carrier frequency allocation scheme is based on an efficient exploitation of channel correlation properties. To be more specific, the inventive assigner assigns successive values to successive carrier frequencies, wherein neighbouring carrier frequencies are uncorrelated or almost uncorrelated. In particular, in a OFDMA scenario, an efficient choice of cyclic delay may improve or even determine the correlation properties of the carrier frequencies, or in other word, of the effective channel frequency response.

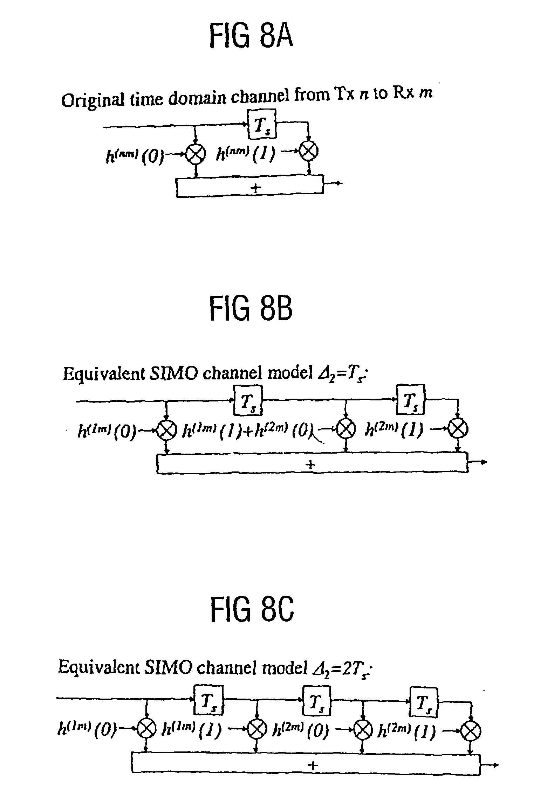

In accordance with a further aspect of the present invention, the cyclic delay should be chosen such that a FEC decoder can exploit the full spatial diversity which is inherent in a channel. In order to preserve the maximum diversity level, the equivalent channel taps should not contain sums of taps at different delays d. This concept is depicted in Figs. 8a, 8b and 8c for a frequency selective channel with a memory D=1 and $n_T$ = 2 transmit antennas. $T_s$ denotes a sampling instant. For $\Delta_2$ = 1, an equivalent channel according to the previously discussed channel with three taps is obtained (Fig. 8c). However, since the second tap is a sum of two independent channel coefficients $h^{(1m)}(0)$ and $h^{(2m)}(0)$, the full diversity which is inherent in the original channel can not be resolved. A cyclic delay of $\Delta_2 = D + 1 = 2$ yields an equivalent channel with four taps and, consequently, enables exploitation of the full diversity (Fig. 8c). Therefore, the cyclic delays preferably meet

$$\Delta_n > \Delta_{n-1} + D,$$

where $\Delta_n$ is normalized to the FFT sample spacing. $T_s$ and D is the channel memory.

However, the channel memory D can vary and is unknown to the transmitter. Therefore, the cyclic delay is preferably as large as possible. Since D is unknown, the cyclic delay is preferably

$$\Delta_n = \frac{N_s(n-1)}{n_T} = \frac{N_s}{n_T} + \Delta_{n-1}.$$

The above equation determines the inventive cyclic delay which guarantees that two neighbouring sub-carriers are uncorrelated.

This inventive choice of the cyclic delays has the consequence that the channel coefficients $H_k^{(m)}(d)$ of neighbouring sub-carriers have low correlation or, ideally, are even uncorrelated. The resulting channel coefficient of the d-th sub-carrier at receive antenna m in the k-th OFDM symbol is given by

$$H_k^{(m)}(d) = \sum_{n=1}^{n_T} H_k^{(nm)}(d)e^{j2\pi d\Delta_n / N_s}, \; d = 0, \ldots, N_s - 1, m = 1, \ldots, n_R,$$

where

$$H_k^{(nm)} = \left[ H_k^{(nm)}(0), \ldots, H_k^{(nm)}(N_s) \right]$$

is the FFT of the channel impulse response.

In order to describe the resulting scenario $n_T$ = 2 transmit antennas and a cyclic delay of $\Delta_2 = \frac{N_s}{2}$ will be considered in the following.

From the above follows that

$$H_k^{(m)}(d) = H_k^{(1m)}(d) + H_k^{(2m)}(d), \; d \text{ even}$$

$$H_k^{(m)}(d) = H_k^{(1m)}(d) - H_k^{(2m)}(d), \; d \text{ odd..}$$

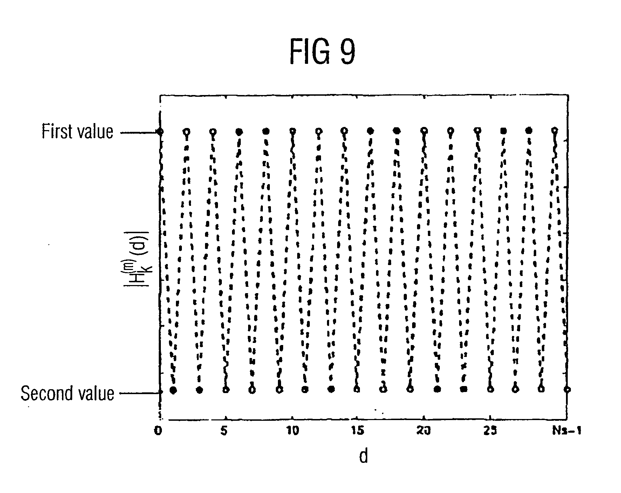

Fig. 9 demonstrates a resulting channel frequency response for a cyclic delay diversity with two transmit antennas and the cyclic delay $\Delta_2 = \dfrac{N_s}{2}$ in the case of a flat fading channel. As can be seen from Fig. 9, the absolute values of the resulting channel frequency response alternate between a first value and a second value, wherein the second value is smaller than the first value.

Given the correlation matrix

$$R^{(m)} = E\left\{H_k^{(m)H} H_k^{(m)}\right\},$$

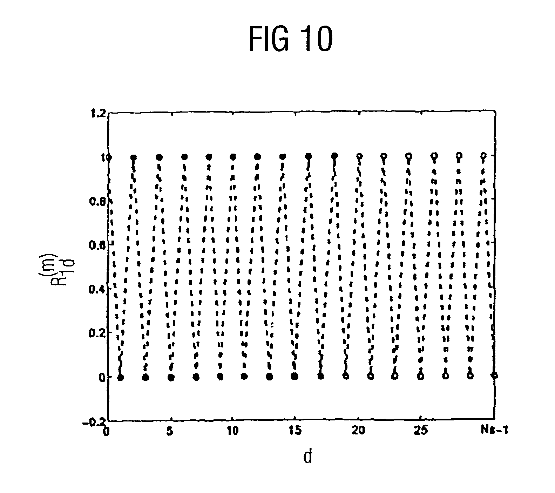

the associated correlation function $R_{1d}^{(m)}$ for a first subcarrier is shown in Fig. 10. It can be seen, that the values of the correlation function vary between 0 (characterizing non-correlated channel coefficients, wherein '1' denotes a relative value) and 1 (characterizing fully-correlated channel coefficients). Hence, the channel coefficients of every other subcarrier are correlated whereas neighboring subcarriers are uncorrelated. Consequently, a standard differential modulation in frequency direction without considering these effects will fail.

The characteristics of the correlation function shown in Fig. 10 demonstrates the inventive concept for avoiding the problems described above. For example, in the case of two antennas, the data can be divided into two streams, which are separately differentially modulated. One of the stream is then transmitted over the even numbered subcarriers, the other one is transmitted over the odd numbered subcarriers, so that the values of the corresponding stream are always transmitted via correlated carriers, e.g. via carrier frequencies associated with correlated channel coefficients in a frequency domain.

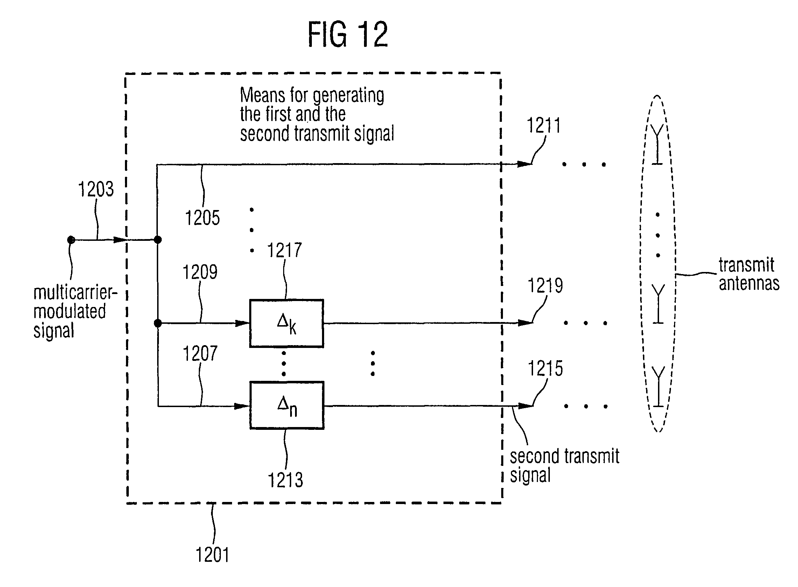

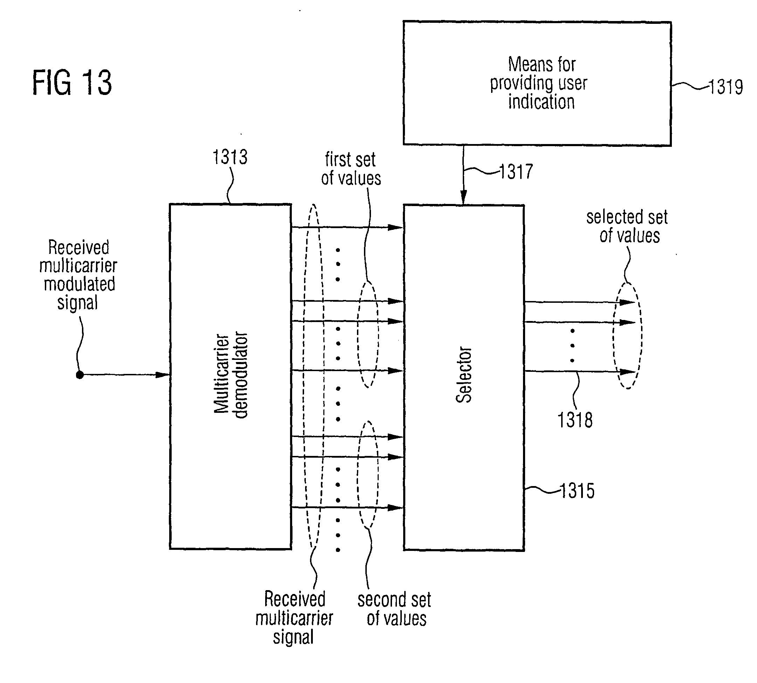

Fig. 13 shows a correlation function $R_{1d}$ for cyclic delay diversity with two transmit antennas and cyclic delay $\Delta_2 = \dfrac{N_s}{2}$ for the frequency selective channel of Fig. 12. It can be seen, that the correlation function has the values characterizing the correlated channel coefficients, wherein these values are greater than the values of the correlation function characterizing the uncorrelated channel coefficients.

If a cyclic delay of for $\Delta_2 = \dfrac{N_s}{4}$ is chosen, then the term $e^{j2\pi d\Delta_n/N_s}$ can take four different values, i.e. in a flat channel four different channels states of the resulting frequency domain channel $H_k^{(m)}$ can be observed.

Fig. 12 shows an embodiment of an apparatus for generating a first and a second transmit signal. Essentially, the apparatus of Fig. 12 is operative for providing the first and the second transmit signal on the basis of the multi-carrier modulated signal provided by the inventive apparatus for providing the multi-carrier modulated signal, which apparatus has been described in detail above.

The apparatus shown in Fig. 12 comprises a means 1201 for generating the first and the second transmit signal. The means 1201 has an input 1203, which input is divided into a plurality of paths by, for example, a divider not explicitly depicted in Fig. 12. For the sake of simplicity, Fig. 12 shows a first path 1205, a second path 1207 and a further path 1209 of the plurality of paths.

The means 1201 for generating the first and the second transmit signal has a plurality of outputs, each output being associated with a signal path. The first signal path 1205 is directly coupled to a first output 1211. The second path 1207 is coupled to an input of a shift element 1213, the shift element 1213 having an output connected to a second output 1215 of the means 1201 for generating the first and the second transmit signal. The further path 1209 is coupled to a further shift element 1217 having an output connected to a further output 1219 of the means 1201 for generating the first and the second transmit signal.

Each of the outputs of the plurality of outputs of the means 1201 for generating the first and the second transmit signal is associated with the transmit antenna. For generating the signals to be transmitted by the plurality of the transmit antennas, each output of the means 1207 for generating the first and the second transmit signal may be coupled to a further means for generating a high frequency signal to be transmitted.

Generally, the inventive means 1201 for generating the first and the second transmit signal from the multi-carrier modulated signal provided via the input 1203 is operative, to generate a first multi-carrier modulated signal as the first transmit signal, and to generate a cyclically shifted version of the multi-carrier modulated signal as the second transmit signal.

As depicted in Fig. 12, the means 1201 generates a plurality of exact copies of the multi-carrier modulated signal, each copy being associated with one of the signal path, wherein a plurality of versions of the multi-carrier modulated signal, each version being obtained from a copy of the multi-carrier modulated signal, may be transmitted by a total number $n_T$ of transmit antennas, wherein each version is assigned to a single transmit antenna. To be more specific, the first transmit signal may be transmitted by a transmit antenna of the total number of transmit antennas, and the second transmit signal depicted in Fig. 12 may be transmitted by the further transmit antenna of the total number of transmit antennas, wherein each antenna of the total number of transmit antennas is associated with a numbering index. The numbering index may is equal to or greater than one and equal to or smaller than $n_T$.

In order to generate the second transmit signal depicted in Fig. 12, the means 1201 for generating the first and the second transmit signal is operative to generate a copy of the multi-carrier modulated signal as a version of the multi-carrier modulated signal and to cyclically shift the copy of the multi-carrier modulated signal by a shift factory

$$\Delta_n = \frac{N_s(n-1)}{n_T} = \frac{N_s}{n_T} + \Delta_{n-1}$$

to obtain the second transmit signal, wherein $N_s$ denotes a number of carriers of the multi-carrier modulation scheme and n denotes the numbering index of the further antenna associated with the second transmit signal.

The means 1201 for generating the transmit signals may be operative to generate the first transmit signal by generating a copy of multi-carrier modulated signal as the version of the multi-carrier modulated signal. This scenario is demonstrated by the path 1205, wherein the first transmit signal is an identical copy of the multi-carrier modulated signal provided by the input 1203. However, the first transmit signal may also be a cyclically shifted further copy of the multi-carrier signal by a shift factor $\Delta_k$

$$\Delta_k = \frac{N_s(k-1)}{n_T} = \frac{N_s}{n_T} + \Delta_{k-1}$$

wherein k denotes the numbering index of the transmit antenna applied for transmitting the first transmit signal. In this case, the first transmit signal would be provided by the output 1219 of Fig. 12.

The shift elements 1217 and 1213 are operative for cyclically shifting the respective copy of the multi-carrier modulated signal, wherein the cyclic shift introduces the previously mentioned cyclic delay. For example, each copy of the multi-carrier modulated signal comprises a set of discrete values associated with numbering indices starting with a value having a lowest numbering index and ending with a value having a highest ordering index. The delay element of the plurality of the delay elements is operative for cyclically shifting the copy of the multi-carrier modulated signal by a number of values, or in the number of values is determined by the shift factor. The cyclical shift is performed such that the last value is placed before the first value to obtain for example the second transmit signal. In other words, the shift elements are operative to perform right shift or left shift to introduce the desired cyclic delay. Hence, the delay elements may be for example shift registers having an input and an output coupled to the input for providing cyclic shift property.

In accordance with the present invention, the correlation between two neighbouring carriers is minimized, when the cyclic shift factor is chosen for each signal to be transmitted as described above. However, in order achieve desired the correlation property, the transmit signals may be cyclically delayed with respect to each other, so that, as mentioned before, the cyclic shift associated with the $n^{th}$-path is depending of the cyclic shift associated with the $k^{th}$-path.

After transmission, a receiver receives a superposition of the signals transmitted by the plurality of antennas. After band pass/basis band conversion, a received multi-carrier modulated signal is obtained, wherein the received multi-carrier modulated signal comprises a super position of the plurality of user signals. In order to extract the user signals, the inventive receiver is operative to perform operations which are exact counterparts to the operations performed by the inventive apparatus discussed above.

Fig. 13 shows a first embodiment of an apparatus for extracting values corresponding to a first user signal from a received multi-carrier modulated signal. The apparatus shown in Fig. 13 may be, for example, implemented in a communication receiver for processing the received multi-carrier signal. To be more specific, if the received multi-carrier modulated signal is formed (at the transmitter) by assigning values or processed values of the first user signal to a first set of carriers having successive carrier frequencies and by assigning values of a second user signal to a first set of carriers having successive carrier frequencies in multi-user scenario, then the values assigned to the first set of successive carrier frequencies as the values assigned to the second set of successive carrier frequencies are simultaneously modulated using a multi-carrier modulation scheme to obtain a multi-carrier modulated signal to be transmitted from a plurality of transmitting points, each point comprising a transmit antenna. In other words, the received multi-carrier signal results from a transmission of the multi-carrier signal provided by the inventive concepts described in detail above.

The apparatus shown in Fig. 13 comprises a multi-carrier demodulator 1313 having an input and a plurality of outputs, wherein the plurality of outputs is connected to a selector 1315. The selector 1315 has a further input 1317 and a number of outputs 1318.

The apparatus depicted in Fig. 13 further comprises a means 1319 for providing user indication, or in the means 1319 has an output coupled to the selector 1315 via the further input 1317 of the selector 1315.

The multi-carrier modulator 1313 is operative for demodulating the received multi-carrier signal comprising a set of values associated with the first set of successive carrier frequencies and a second set of values associated with the second set of successive carrier frequencies. The multi-carrier demodulator 1313 is operative to perform a multi-carrier demodulation in accordance with a multi-carrier modulation scheme used in a transmitter. To be more specific, the multi-carrier demodulator 1313 performs an operation which is inverse to that performed by for example the multi-carrier modulator of Fig. 1.

The multi-carrier demodulator 1313 provides, after demodulation, the received multi-carrier signal. The selector 1315 is operative for selecting one set of the first or second set of values to obtain extracted values of the first or of the second set of values. The extracted values (the selected set of values) is then provided via the number of outputs 1318 for a further processing. In Fig. 13, the selector 1315 provides the selected set of values in parallel. However, the selector 1315 may further comprise a parallel to serial converter so that the selected set of values is provided as a serial stream of values.

In order to only extract the set of values corresponding to the associated user, the selector 1315 receives a user indication provided by the means 1317 for providing user indication, whether the first or the second user signal is to be extracted.

The means 1319 for providing user indication may be operative to receive an information, which set of carriers comprises the associated set (or a plurality of sets) of values of the first or of the second user.

The first set of carriers (to which the first set of values is assigned) may comprise successive carrier frequencies starting with a first carrier frequency of the first set of successive carrier frequencies, and the second set of carriers (to which the second set of values is assigned) comprise successive carrier frequencies starting with a first carrier frequency of the second set of successive carrier frequencies. In this case, the selector 1315 may be operative to select the first set of carriers of the first user signal by selecting successive carriers starting with a first carriers frequency of the set of carriers or to select the second set of carriers of the second user signal by selecting successive carriers starting with the first carrier frequency of the second set of carriers associated with the second user signal.

The means 1319 for providing user indication may provide the first carrier frequency of the first set of carrier frequencies, when signalling that the first user signals to be extracted or to provide the first carrier frequency of the second set of carrier frequencies in order to signal that the second user signal is to be extracted.

The values assigned to the first set of successive values are mapped on successive signals space representatives of values corresponding to the first user signal, and/or if the values assigned to the second set of successive values are successive signal space representatives of values corresponding to the second user signal, wherein the successive signal space representatives belong to predetermined signal space constellation, i.e. QAM, then the selector may further comprise a de-mapper for de-mapping the values of the first set to obtain values corresponding to the first user for de-mapping the values of the second set to obtain values corresponding to the second user. In other words, the de-mapper is operative to perform an operation which is inverse to that of the mapper shown in Fig. 2.

Accordingly, if the values corresponding to the first user and/or if the values corresponding to the second user are interleaved versions of successive values corresponding to the first user and/or to the second user, then the selector may further comprise a de-interleaver for obtaining the successive values corresponding to the first user as the extracted values corresponding to the first user or for obtaining the successive values corresponding to the second user as the values corresponding to the second user. In other words, the de-interleaver performs an inverse operation to the operation of the de-interleavers shown in Fig. 2.

If, as discussed above, the values corresponding to the first user are encoded on the basis of an encoding scheme, i.e. a convolutional code, and/or if the values corresponding to the second user are encode to the basis of the encoding scheme, then the selector may further comprise a decoder for decoding the encoded values of the first or of the second user signal. The inventive decoder performs a decoding operation which is inverse to the coding operation of the coders shown in Fig. 2.

In reference to the embodiment of Fig. 3, the received multi-carrier signal may further comprise a third set of frequencies to each further values of the first user are assigned and/or a fourth set of values associated with the fourth set of frequencies, to which further values of the second user signal are assigned. In this case, the selector may be operative to select the third set or the fourth set of values, in order to collect the values of the first user signal, by collecting for example the fourth set of carrier frequencies in the third set of carrier frequencies or by collecting the second set of carrier frequencies and the fourth set of carrier frequencies.

According to the embodiments described above, the third set of carriers may comprise successive carrier frequencies starting with fourth carrier frequency of the third set of successive carrier frequencies, and the fourth set of carriers may comprise successive carrier frequencies starting with a first carrier frequency of the fourth set of carrier frequencies. Accordingly, the selector is operative to select the third set of carriers of the first user signal by selecting successive carriers starting with the first carrier frequency of the third set of carriers or to select the fourth set of carrier of the second user signal by selecting successive carriers starting with the first carrier frequency of the fourth set of carriers. In this case, the means for providing user indication may be operative to provide the first carrier frequency of the third set of carrier frequencies when signalling that the first user signal to be extracted, or to provide the fourth carrier frequency of the fourth set of carrier frequencies when signalling that the second user signal is to be extracted. Accordingly, the further values assigned to the third set of successive values may be mapped on successive signal space representative or further values corresponding to the first user signal, and/or the further values assigned to the fourth set of successive values may be successive further signal space representatives of further values corresponding to the second user signal. As described above, the successive signal space representatives may belong to a predetermined signal space constellation, for example QAM. Accordingly, the inventive selector may further comprise a further demapper for demapping the values of the third set to obtain values corresponding to the first user or for de-mapping the values of the fourth set to obtain values corresponding to the second user, wherein the further demapper operate in the previously described manner.

Accordingly, the further values corresponding to the first user and/or the further values corresponding to the second user may be interleaved versions of further successive values corresponding to the first user and/or to the second user. In this case, the selector comprises a further de-interleaver for obtaining further obtaining a further successive values corresponding to the first user or for obtaining the further successive values corresponding to the first user. In other words, the further de-interleaver de-interleaves the interleaved versions by performing an operation which is inverse to the operation of the previously described interleaver.

Furthermore, the further values corresponding to the first user may be encoded on the basis of an encoding scheme, for example a convolutional encoding, and/or wherein the further values corresponding to the second user may be encoded on the basis of the encoding scheme. In this case, the selector may comprise a further decoder for decoding the encoded values corresponding to the first or to the second user, as described above.

Referring again to Fig. 3, the values corresponding to first set of values may be a stream of selected values of the first user signal obtained by selecting every $S^{th}$ value of the first user signal starting with a value having an ordering index, wherein the further values corresponding to the third set of values are a further stream of selected values of the first user signal obtained by selecting every $S^{th}$ value of the first user signal starting with a value having a further ordering index, and/or wherein the second set of values is a stream of selected values of the second user signal and wherein the fourth set of values is a further stream of selected values of the second user stream, the both streams being obtained by selecting the values of the first user signal in the same way as performed with respect to the first user signal, wherein S is, as mentioned above, a number equal to or greater than 2, then the selector may further comprise a means for collecting the values of the stream and of the further stream of the first user signal or of the second user signal to obtain the first user signal or the second user signal. In other words, the means for collecting merges the stream and the further stream such that successive values of the first stream become every S-th value of the first user signal or of the second user signal.

Depending on certain implementation requirements of the inventive method for providing a multi-carrier modulated signal, for generating a first and a second transmit signal, for extracting values corresponding to a first user signal can be implemented in hardware or in software. The implementation can be performed using a digital storage medium, in particular a disk or a CD having electronically readable control signals toward thereon, which can cooperate with a programmable computer system such that the inventive method or performed. Generally, the present invention is therefore, a computer program product with a program code stored on a machine readable carrier, the program code performing the inventive method, when the computer program product runs on a computer. In other words, the inventive methods are, therefore, a computer program having a program code for performing the inventive methods, when the computer program runs on a computer.

**Claims**

1. Apparatus for generating a first and a second transmit signal from a multi-carrier modulated signal from a first user signal and from a second user signal using a multi-carrier modulation scheme having a number of carriers with successive carrier frequencies comprising:

   an input (101) for receiving the first user signal and the second user signal;
   an assigner (115; 223; 337) for assigning values of the first user signal or processed values of the first user signal to a first set of carriers having successive carrier frequencies, for assigning values of the second user signal or processed values of the second user signal to a second set of carriers having successive carrier frequencies, for assigning further values of the first user signal to a third set of carriers having successive carrier frequencies and for assigning further values of the second user signal to a fourth set of carriers having successive carrier frequencies;
   a multi-carrier modulator (117; 225) for simultaneously modulating values assigned to the first, second, third and fourth set of successive carrier frequencies to obtain the multi-carrier modulated signal; and
   means (1201) for generating the first and the second transmit signal, wherein the means (1201) for generating the first and the second transmit signal is operative for generating a version of the multi-carrier modulated signal as the first transmit signal, and for generating a cyclically shifted version of the multi-carrier modulated signal as the second transmit signal;
   wherein
   the input comprises a first input terminal (103) for receiving only the first user signal and for providing values of the first user signal or processed values of the first user signal to the assigner (115; 223, 337), and a second input terminal (105) for receiving only the second user signal and for providing values or processed values of the second user signal to the assigner (115; 223; 337), wherein the first input terminal (103) comprises a first selector (301) for providing values of the first user signal by selecting every $S^{th}$ value of the first user signal starting with a value having an ordering index, and for providing further values of the first user signal by selecting every $S^{th}$ value of the first user signal starting with a further value having a further ordering index, and wherein the second input terminal (105) comprises a second selector (319) for providing values of the second user signal by selecting every $S^{th}$ value of the second user signal starting with a value having an ordering index and for providing further values of the second user signal by selecting every $S^{th}$ value of the second user signal starting with a further value having a further ordering index, and wherein S is a number equal to or greater than 2.

2. Apparatus in accordance with claim 1, wherein the first input terminal (103) comprises a first encoder (207) for encoding values of the first user signal and for providing the encoded values of the first user signal as values of the first user signal, and wherein the second input terminal (105) comprises a second encoder (215) for encoding values of the second user signal as for providing the encoded values of the second user signal as values of the second user signal.

3. Apparatus in accordance with claim 1 or 2, wherein the first input terminal (103) comprises an interleaver (209) for interleaving the values of the first user signal and for providing the interleaved values of the first user signal as values of the first user signal, and
   wherein the second input terminal (105) comprises an interleaver (217) for interleaving the values of the first user signal and for providing the interleaved values of the first user signal as the values of the first user signal.

4. Apparatus in accordance with claims 1 to 3, wherein the first input terminal (103) comprises a mapper (211) for mapping successive values of the first user signal on a number of successive signals space representatives of a predetermined signal space constellation to obtain the number of successive signal space representatives of the first user signal as processed values of the first user signal, and
   wherein the second input terminal (105) comprises a mapper (219) for mapping successive values of the second user signal on a number of successive signals space representatives of a predetermined signal space constellation to obtain the number of successive signal space representatives of the second user signal as processed values of the second user signal.

5. Apparatus in accordance with claim 1, wherein the first input terminal (103) comprises an interleaver (307) for interleaving the values of the first user signal to obtain interleaved values of the first user signal as the values of the first user signal, and wherein the first input terminal (103) comprises a further interleaver (309) for interleaving the further values of the first user signal to obtain interleaved further values of the first user signal as values of the first user signal,

wherein the second input terminal (105) comprises an interleaver (325) for interleaving the values of the second user signal to obtain interleaved values of the second user signal as the values of the second user signal, and wherein the second input terminal (105) comprises a further interleaver (327) for interleaving the further values of the second user signal to obtain interleaved further values of the second user signal as values of the second user signal.

6. Apparatus in accordance with claims 1 to 5, wherein the first input terminal (103) comprises a mapper (311) for mapping the values of the first user signal on the number of successive signal space representatives of a predetermined signal space constellation to obtain the number of successive signal space representatives of the values of the first user signal as processed values of the first user signal,
wherein the first input terminal (103) comprises a further mapper (303) for mapping the values of the first user signal on the number of successive signal space representatives of a predetermined signal space constellation to obtain the number of further successive signal space representatives, of the further values of the first user signal as further processed values of the first user signal, and
wherein the second input terminal (105) comprises a mapper (329) for mapping the values of the second user signal on the number of successive signal space representatives of a predetermined signal space constellation to obtain the number of successive signal space representatives of the values of the second user signal as processed values as processed values of the second user signal, and
wherein the second input terminal (105) comprises a further mapper (331) for mapping the values of the second user signal on the number of successive signal space representatives of a predetermined signal space constellation to obtain the number of further successive signal space representatives of the further values of the second user signal as further processed values of the second user signal.

7. Apparatus in accordance with claims 1 to 6, wherein the predetermined signal space constellation belongs to a PSK-scheme, QAM-scheme or PAM-scheme.

8. Apparatus in accordance with anyone of the proceeding claims 1 to 7, further comprising a means for providing channel information with respect to a channel characteristic within a bandwidth determined by a number of carriers of the multi-carrier modulation scheme, wherein the assigner (115; 223; 337) is operative for determining a first carrier frequency of the first set of successive carrier frequencies and/or for determining a second carrier frequency of the second set of successive carrier frequencies on the basis of the channel information.

9. Apparatus in accordance with claims 1 to 7, wherein the assigner (115; 223; 337) is operative for assigning values of the first user signal to the first set of carriers having successive carrier frequencies, to assign further values of the first user signal to a third set of carriers having successive carrier frequencies, to assign values of the second user signal to the second set of carrier frequencies and to assign the further values of the second user signal to a fourth set of carrier frequencies having successive carrier frequencies.

10. Apparatus in accordance with claim 9, further comprising a means for providing channel information with respect to a channel characteristic within a bandwidth determined by the number of carriers of the multi-carrier modulation scheme, wherein the assigner is operative for determining a first carrier frequency of the first set of successive carrier frequencies, and/or for determining a carrier frequency of the second set of successive carrier frequencies, and/or for determining a first carrier frequency of the third set of successive carrier frequencies and/or for determining a first carrier frequency of the fourth set of successive frequencies an the basis of the channel information.

11. Apparatus in accordance with claims 9 to 10, wherein the multi-carrier modulator (117; 225) is operative for simultaneously de-modulating values assigned to the first set of successive carrier frequencies, to the second set of successive carrier frequencies, to the third set of successive carrier frequencies and to the fourth set of successive carrier frequencies to obtain the multi-carrier modulated signal.

12. Apparatus in accordance with anyone of the proceeding claims 1 to 11, wherein the multi-carrier modulator is operative for performing an IFT, IFFT or an IDFT operation to obtain the multi-carrier modulated signal.

13. Apparatus in accordance with one of claims 1 to 12, wherein the first transmit signal is to be transmitted by a transmit antenna of a total number $n_T$ of transmit antennas, wherein the second transmit signal is to be transmitted by a further transmit antenna of the total number of transmit antennas, wherein each antenna of the total number of transmit antennas is associated with a numbering index equal to or greater than 1 and equal to or smaller than $n_T$,

wherein the means (1201) for generating the first and the second transmit signal is operative for generating a copy of the multi-carrier modulated signal and for cyclically shifting the copy of the multi-carrier modulated signal by a shift factor $\Delta_n$ :

$$\Delta_n \;=\; \frac{N_s(n-1)}{n_T} \;=\; \frac{N_s}{n_T} \;+\; \Delta_{n-1},$$

to obtain the second transmit signal, wherein $N_s$ denotes a number of carriers of the multi-carrier modulation scheme and n denotes the numbering index of the further antenna.

14. Apparatus in accordance with claim 13, wherein the means (1201) for generating the first and the second transmit signal is operative for generating a further copy of the multi-carrier modulated signal as the version of the multi-carrier modulated signal, when a numbering index k of the transmit antenna associated with the second transmit signal is equal to 1, or otherwise to cyclically shift the further copy of the multi-carrier modulated signal by a shift factor $\Delta_k$:

$$\Delta_k \;=\; \frac{N_s(k-1)}{n_T} \;=\; \frac{N_s}{n_T} \;+\; \Delta_{k-1},$$

to obtain the version of the multi-carrier modulated signal.

15. Apparatus in accordance with claim 13 or 14, wherein the copy of the multi-carrier modulated signal comprises a set of discrete values associated with numbering indices starting with a value having a lowest numbering index and ending with a value having a highest ordering index, wherein the means (1201) for generating the first and the second transmit signal comprises a delay element (1213, 1217) being operative for cyclically shifting the copy of the multi-carrier modulated signal by a number of values, the number being determined by the shift factor such that the last value is placed before the first value to obtain the second transmit signal.

16. Apparatus including means for extracting values corresponding to user signals from a received multi-carrier modulated signal being transmitted as a first and a second transmit signal, the first transmit signal being a version of the multi-carrier modulated signal and the second transmit signal being a cyclically shifted version of the multi-carrier modulated signal, the received multi-carrier modulated signal being formed by assigning values or processed values of a first user signal to a first set of carriers having successive carrier frequencies, by assigning values of a second user signal to a second set of carriers having successive carriers frequencies, by assigning further values of the first user signal to a third set of carriers having successive carriers frequencies, and by assigning further values of the second user signal to a fourth set of carriers having successive carriers frequencies in a multi-user scenario, wherein the values corresponding to the first set of values are obtained by selecting every $S^{th}$ value of the first user signal starting with a value having an ordering index, and wherein the further values corresponding to the third set of values are obtained by selecting every $S^{th}$ value of the first user signal starting with a value having a further ordering index, and/or wherein the values corresponding to the second set of values are obtained by selecting every $S^{th}$ value of the second user signal starting with a value having an ordering index, and wherein the further values corresponding to the fourth set of values are obtained by selecting every $S^{th}$ value of the second user signal starting with a value having a further ordering index, wherein S is a number equal 2 or greater than 2, the values assigned to the first, second, third or fourth set of successive carrier frequencies being simultaneously modulated using a multi-carrier modulation scheme to obtain a multi-carrier modulated signal, the multi-carrier modulated signal being transmitted from a plurality of transmitting points, the apparatus further comprising:

a multi-carrier de-modulator (1313) for de-modulating the received first and second multi-carrier modulated signals for obtaining a received multi-carrier signal comprising a first set of values associated with the first set of successive carrier frequencies, a second set of values associated with the second set of successive carrier frequencies, a third set of values associated with the third set of successive carrier frequencies and a fourth set of values associated with the fourth set of successive carrier frequencies;
means (1319) for providing a user indication to signal whether the first or the second user signal is to be extracted;
a selector (1315) for selecting the first or the second or the third or the fourth set of values to obtain extracted values of the first or second or third or fourth set of values, wherein the selector (1315) further comprises means for collecting values of the first, second, third or fourth set of values to obtain the first user signal or the second user signal, the means for collecting being operative for collecting every $S^{th}$ value of the first user signal from successive values of the first or third set of values, or for collecting every $S^{th}$ value of the second user signal from successive values of the second or fourth set of values.

17. Apparatus according to claim 16, wherein the first set of carriers comprises successive carrier frequencies starting with a first carrier frequency of the first set of successive carrier frequencies, and wherein the second set of carriers comprises successive carrier frequencies starting with a first carrier frequency of the second set of successive carriers frequencies, wherein the selector (1315) is operative for selecting the first set of carriers of the first user signal by selecting successive carriers starting with the first carrier frequency of the first set of carriers or for selecting the second set of carriers of the second user signal by selecting successive carriers starting with the first carrier frequency of the second set of carriers.

18. Apparatus in accordance with claim 17, wherein the means (1319) for providing user indication is operative for providing a first carrier frequency of the first set of carrier frequecies when signalling that the first user signal is to be extracted, or for providing the first carrier frequency of the second set of carrier frequencies when signalling that the second user signal is to be extracted.

19. Apparatus in accordance with claims 16 to 18, wherein the values assigned the first set of successive values are mapped on successive signal space representatives of values corresponding to the first user signal, and/or wherein the values assigned to the second set of successive values are successive signal space representatives of values corresponding to the second user signal, wherein the successive signal space representatives belong to a predetermined signal space constellation, the selector (1315) further comprising a de-mapper for de-mapping the values of the first set to obtain values corresponding to first user or for de-mapping the values of the second set to obtain values corresponding to the second user.

20. Apparatus in accordance with claim 19, wherein the values corresponding to the first user and/or wherein the values corresponding to the second user are interleaved versions of successive values corresponding to the first user and/or to the second user, the selector (1315) further comprising a de-interleaver for obtaining successive values corresponding to the first user as the extracted values corresponding to the first user or for obtaining successive values corresponding to the second user as the extracted values corresponding to the second user.

21. Apparatus in accordance with claim 19 or 20, wherein the values corresponding to the first user are encoded on the basis of an encoding scheme, and/or wherein the values corresponding to the second user are encoded on the basis of the encoding scheme,
wherein the selector (1315) comprises a decoder for decoding the encoded values corresponding to the first or to the second user.

22. Apparatus in accordance with claims 16 to 21, wherein the third set of carriers comprises successive carrier frequencies starting with the first carrier frequency of the third set of successive carrier frequencies, and wherein the fourth set of carriers comprises successive carrier frequencies starting with a first carrier frequency of the fourth set of carrier frequencies, wherein the selector is operative for selecting the third set of carriers of the first user signal by selecting successive carriers starting with a first carrier frequency of the third set of carriers or for selecting the fourth set of carriers of the second user signal by selecting successive carriers starting with a first carrier frequency of the fourth set of carriers.

23. Apparatus in accordance with claim 22, wherein the means (1319) for providing user indication is operative for providing the first carrier frequency of the third set of carrier frequencies when signalling that the first user signal is to be extracted, or for providing the first carrier frequency of the fourth set of carrier frequencies when signalling that the second user signal is to be extracted.

24. Apparatus in accordance with claims 16 to 23, wherein the further values assigned to the third set of successive values are mapped on successive signal space representatives of further values corresponding to the first user signal, and/or wherein the further values assigned to the fourth set of successive values are successive further signal space representatives of further values corresponding to the second user signal, wherein the successive signal space representatives belong to a predetermined signal space constellation, the selector (1315) further comprising a further de-mapper for de-mapping the values of the third set to obtain values corresponding to the first user, or for de-mapping the values of the fourth set to obtain values corresponding to the second user.

25. Apparatus in accordance with claim 24, wherein the further values corresponding to the first user and/or wherein the further values corresponding to the second user are interleaved versions of further successive values corresponding to the first user and/or to the second user, the selector (1315) comprising a further de-interleaver for obtaining the further successive values corresponding to the first user or for obtaining the further successive value corresponding to the second user.

26. Apparatus in accordance with claim 24 or 25, wherein the further values corresponding to the first user are encoded on the basis of an encoding scheme, and/or wherein the further values corresponding to the second user are encoded an the basis of the encoding scheme, wherein the selector (1315) comprises a further decoder for decoding the encoded values corresponding to the first or to the second user.

27. Method for generating a first and a second transmit signal from a multi-carrier modulated signal from a first user signal and from a second user signal using a multi-carrier modulation scheme having a number of carriers with successive carrier frequencies, comprising the following steps of:

receiving the first user signal and the second user signal;
selecting every $S^{th}$ value of the first user signal starting with a value having an ordering index to obtain values of the first user signal, selecting every $S^{th}$ value of the first user signal starting with a further value having a further ordering index to obtain further values of the first user signal, selecting every $S^{th}$ value of the second user signal starting with a value having an ordering index to obtain values of the second user signal, and selecting every $S^{th}$ value of the second user signal starting with a further value having a further ordering index to obtain further values of the second user signal, wherein S is a number equal to or greater than 2;
assigning values of the first user signal or processed values of the first user signal to a first set of carriers having successive carrier frequencies, and assigning further values of the first user signal to a third set of carriers having successive carrier frequencies;
assigning values of the second user signal or processed values of the second user signal to a second set of carriers having successive carrier frequencies, and assigning further values of the second user signal to a fourth set of carriers having successive carrier frequencies; simultaneously modulating values assigned to the first, second, third or fourth set of successive carrier frequencies to obtain the multi-carrier modulated signal using a multi-carrier modulation scheme;
generating a version of the multi-carrier modulated signal as the first transmit signal; and
generating a cyclically shifted version of the multicarrier modulated signal as the second transmit signal.

28. Method for extracting values corresponding to signals from a received multi-carrier modulated signal being transmitted as a first and a second transmit signal, the first transmit signal being a version of the multi-carrier modulated signal and the second transmit signal being a cyclically shifted version of the multi-carrier modulated signal, the received multi-carrier modulated signal being formed by assigning values or processed values of a first user signal to a first set of carriers having successive carrier frequencies, by assigning values of a second user signal to a second set of carriers having successive carriers frequencies, by assigning further values of the first user signal to a third set of carriers having successive carriers frequencies, and by assigning further values of the second user signal to a fourth set of carriers having successive carriers frequencies in a multi-user scenario, wherein the values corresponding to the first set of values are obtained by selecting every $S^{th}$ value of the first user signal starting with a value having an ordering index, and wherein the further values corresponding to the third set of values are obtained by selecting every $S^{th}$ value of the first user signal starting with a value having a further ordering index, and/or wherein the values corresponding to the second set of values are obtained by selecting every $S^{th}$ value of the second user signal starting with a value having an ordering index, and wherein the further values corresponding to the fourth set of values are obtained by selecting every $S^{th}$ value of the second user signal starting with a value having a further ordering index, wherein S is a number equal 2 or greater than 2, the values assigned to the first, second, third or fourth set of successive carrier frequencies being simultaneously modulated using a multi-carrier modulation scheme to obtain a multi-carrier modulated signal, the multi-carrier modulated signal being transmitted from a plurality of transmitting points, comprising the following steps of:

receiving the received multi-carrier signals;
de-modulating the received first and second multi-carrier modulated signals to obtain a received multi-carrier signal comprising a first set of values associated with the first set of successive carrier frequencies, a second set of values associated with the second set of successive carrier frequencies, a third set of values associated with the third set of successive carrier frequencies and a fourth set of values associated with the fourth set of successive carrier frequencies;

providing an user indication to signal whether the first or the second user signal is to be extracted;

selecting the first or the second or the third or the fourth set of values to obtain extracted values of the first or second or third or fourth set of values; and

collecting every $S^{th}$ value of the first user signal from successive values of the first or third set of values, or collecting every $S^{th}$ value of the second user signal from successive values of the second or fourth set of values.

**29.** Computer program having a program code for performing the methods in accordance with claim 27 or 28, when the program runs an a computer.

**Patentansprüche**

**1.** Vorrichtung zum Erzeugen eines ersten und eines zweiten Sendesignals aus einem modulierten Mehrträgersignal aus einem ersten Benutzersignal und aus einem zweiten Benutzersignal unter Verwendung eines Mehrträgermodulat.ionsschemas mit einer Anzahl von Trägern mit aufeinander folgenden Trägerfrequenzen, die folgende Merkmale aufweist:

einen Eingang (101) zum Empfangen des ersten Benutzersignals und des zweiten Benutzersignals;

einen Zuweiser (115; 223; 337) zum Zuweisen von Werten des ersten Benutzersignals oder von verarbeiteten Werten des ersten Benutzersignals einem ersten Satz von Trägern mit aufeinander folgenden Trägerfrequenzen, zum Zuweisen von Werten des zweiten Benutzersignals oder verarbeiteten Werten des zweiten Benutzersignals einem zweiten Satz von Trägern mit aufeinander folgenden Trägerfrequenzen, zum Zuweisen weiterer Werte des ersten Benutzersignals einem dritten Satz von Trägern mit aufeinander folgenden Trägerfrequenzen und zum Zuweisen weiterer Werte des zweiten Benutzersignals einem vierten Satz von Trägern mit aufeinander folgenden Trägerfrequenzen;

einen Mehrträgermodulator (117; 225) zum simultanen Modulieren von Werten, die dem ersten, dem zweiten, dem dritten und dem vierten Satz von aufeinander folgenden Trägerfrequenzen zugewiesen sind, um das modulierte Mehrträgersignal zu erhalten; und

eine Einrichtung (1201) zum Erzeugen des ersten und des zweiten Sendesignals, wobei die Einrichtung (1201) zum Erzeugen des ersten und des zweiten Sendesignals wirksam ist zum Erzeugen einer Version des modulierten Mehrträgersignals als das erste Sendesignal und zum Erzeugen einer zyklisch verschobenen Version des modulierten Mehrträgersignals als das zweite Sendesignal;

wobei

der Eingang einen ersten Eingangsanschluss (103) zum Empfangen lediglich des ersten Benutzersignals und zum Liefern von Werten des ersten Benutzersignals oder verarbeiteten Werten des ersten Benutzersignals an den Zuweiser (115; 223, 337) und einen zweiten Eingangsanschluss (105) zum Empfangen lediglich des zweiten Benutzersignals und zum Liefern von Werten oder verarbeiteten Werten des zweiten Benutzersignals an den Zuweiser (115; 223, 337) aufweist, wobei der erste Eingangsanschluss (103) einen ersten Selektor (301) zum Liefern von Werten des ersten Benutzersignals durch ein Auswählen jedes S-ten Werts des ersten Benutzersignals beginnend mit einem Wert mit einem Ordnungsindex und zum Liefern weiterer Werte des ersten Benutzersignals durch ein Auswählen jedes S-ten Werts des ersten Benutzersignals beginnend mit einem weiteren Wert mit einem weiteren Ordnungsindex aufweist, und

wobei der zweite Eingangsanschluss (105) einen zweiten Selektor (319) zum Liefern von Werten des zweiten Benutzersignals durch ein Auswählen jedes S-ten Werts des zweiten Benutzersignals beginnend mit einem Wert mit einem Ordnungsindex und zum Liefern weiterer Werte des zweiten Benutzersignals durch ein Auswählen jedes S-ten Werts des zweiten Benutzersignals beginnend mit einem weiteren Wert mit einem weiteren Ordnungsindex aufweist, und

wobei S eine Zahl größer oder gleich 2 ist.

**2.** Vorrichtung gemäß Anspruch 1, bei der der erste Eingangsanschluss (103) einen ersten Codierer (207) zum Codieren von Werten des ersten Benutzersignals und zum Liefern der codierten Werte des ersten Benutzersignals als Werte des ersten Benutzersignals aufweist, und bei der der zweite Eingangsanschluss (105) einen zweiten Codierer (215) zum Codieren von Werten des zweiten Benutzersignals und zum Liefern der codierten Werte des zweiten Benutzersignals als Werte des zweiten Benutzersignals aufweist.

**3.** Vorrichtung gemäß Anspruch 1 oder 2, bei der der erste Eingangsanschluss (103) einen Verschachtler (209) zum Verschachteln der Werte des ersten Benutzersignals und zum Liefern der verschachtelten Werte des ersten Benutzersignals als Werte des ersten Benutzersignals aufweist, und

bei der der zweite Eingangsanschluss (105) einen Verschachtler (217) zum Verschachteln der Werte des ersten Benutzersignals und zum Liefern der verschachtelten Werte des ersten Benutzersignals als Werte des ersten Benutzersignals aufweist.

4. Vorrichtung gemäß einem der Ansprüche 1 bis 3, bei der der erste Eingangsanschluss (103) einen Abbilder (211) zum Abbilden aufeinander folgender Werte des ersten Benutzersignals auf eine Anzahl von aufeinander folgenden Signalraumvertretern einer vorbestimmten Signalraumkonstellation aufweist, um die Anzahl von aufeinander folgenden Signalraumvertretern des ersten Benutzersignals als verarbeitete Werte des ersten Benutzersignals zu erhalten, und

wobei der der zweite Eingangsanschluss (105) einen Abbilder (219) zum Abbilden aufeinander folgender Werte des zweiten Benutzersignals auf eine Anzahl von aufeinander folgenden Signalraumvertretern einer vorbestimmten Signalraumkonstellation aufweist, um die Anzahl von aufeinander folgenden Signalraumvertretern des zweiten Benutzersignals als verarbeitete Werte des zweiten Benutzersignals zu erhalten.

5. Vorrichtung gemäß Anspruch 1, bei der der erste Eingangsanschluss (103) einen Verschachtler (307) zum Verschachteln der Werte des ersten Benutzersignals, um verschachtelte Werte des ersten Benutzersignals als die Werte des ersten Benutzersignals zu erhalten, aufweist und wobei der erste Eingangsanschluss (103) einen weiteren Verschachtler (309) zum Verschachteln der weiteren Werte des ersten Benutzersignals aufweist, um verschachtelte weitere Werte des ersten Benutzersignals als Werte des ersten Benutzersignals zu erhalten,

wobei der der zweite Eingangsanschluss (105) einen Verschachtler (325) zum Verschachteln der Werte des zweiten Benutzersignals aufweist, um verschachtelte Werte des zweiten Benutzersignals als die Werte des zweiten Benutzersignals zu erhalten, und wobei der zweite Eingangsanschluss (105) einen weiteren Verschachtler (327) zum Verschachteln der weiteren Werte des zweiten Benutzersignals aufweist, um verschachtelte weitere Werte des zweiten Benutzersignals als Werte des zweiten Benutzersignals zu erhalten.

6. Vorrichtung gemäß einem der Ansprüche 1 bis 5, bei der der erste Eingangsanschluss (103) einen Abbilder (311) zum Abbilden der Werte des ersten Benutzersignals auf die Anzahl von aufeinander folgenden Signalraumvertretern einer vorbestimmten Signalraumkonstellation aufweist, um die Anzahl von aufeinander folgenden Signalraumvertretern der Werte des ersten Benutzersignals als verarbeitete Werte des ersten Benutzersignals zu erhalten,

wobei der erste Eingangsanschluss (103) einen weiteren Abbilder (303) zum Abbilden der Werte des ersten Benutzersignals auf die Anzahl von aufeinander folgenden Signalraumvertretern einer vorbestimmten Signalraumkonstellation aufweist, um die Anzahl von weiteren aufeinander folgenden Signalraumvertretern der weiteren Werte des ersten Benutzersignals als weitere verarbeitete Werte des ersten Benutzersignals zu erhalten, und

wobei der zweite Eingangsanschluss (105) einen Abbilder (329) zum Abbilden der Werte des zweiten Benutzersignals auf die Anzahl von aufeinander folgenden Signalraumvertretern einer vorbestimmten Signalraumkonstellation aufweist, um die Anzahl von aufeinander folgenden Signalraumvertretern der Werte des zweiten Benutzersignals als verarbeitete Werte des zweiten Benutzersignals zu erhalten, und

wobei der zweite Eingangsanschluss (105) einen weiteren Abbilder (331) zum Abbilden der Werte des zweiten Benutzersignals auf die Anzahl von aufeinander folgenden Signalraumvertretern einer vorbestimmten Signalraumkonstellation aufweist, um die Anzahl von weiteren aufeinander folgenden Signalraumvertretern der weiteren Werte des zweiten Benutzersignals als weitere verarbeitete Werte des zweiten Benutzersignals zu erhalten.

7. Vorrichtung gemäß einem der Ansprüche 1 bis 6, bei der die vorbestimmte Signalraumkonstellation zu einem PSK-Schema, einem QAM-Schema oder einem PAM-Schema gehört.

8. Vorrichtung gemäß einem der vorhergehenden Ansprüche 1 bis 7, die ferner eine Einrichtung zum Liefern von Kanalinformationen bezüglich einer Kanalcharakteristik innerhalb einer Bandbreite aufweist, die durch eine Anzahl von Trägern des Mehrträgermodulationsschemas bestimmt ist, wobei der Zuweiser (115; 223; 337) wirksam ist zum Bestimmen einer ersten Trägerfrequenz des ersten Satzes von aufeinander folgenden Trägerfrequenzen und/oder zum Bestimmen einer zweiten Trägerfrequenz des zweiten Satzes von aufeinander folgenden Trägerfrequenzen auf der Basis der Kanalinformationen.

9. Vorrichtung gemäß einem der Ansprüche 1 bis 7, bei der der Zuweiser (115; 223; 337) wirksam ist zum Zuweisen von Werten des ersten Benutzersignals dem ersten Satz von Trägern mit aufeinander folgenden Trägerfrequenzen, um weitere Werte des ersten Benutzersignals einem dritten Satz von Trägern mit aufeinander folgenden Trägerfrequenzen zuzuweisen, um Werte des zweiten Benutzersignals dem zweiten Satz von Trägerfrequenzen zuzuweisen und um die weiteren Werte des zweiten Benutzersignals einem vierten Satz von Trägerfrequenzen mit aufeinander folgenden Trägerfrequenzen zuzuweisen.

10. Vorrichtung gemäß Anspruch 9, die ferner eine Einrichtung zum Liefern von Kanalinformationen bezüglich einer Kanalcharakteristik innerhalb einer Bandbreite aufweist, die durch die Anzahl von Trägern des Mehrträgermodulationsschemas bestimmt ist, wobei der Zuweiser wirksam ist zum Bestimmen einer ersten Trägerfrequenz des ersten Satzes von aufeinander folgenden Trägerfrequenzen und/oder zum Bestimmen einer Trägerfrequenz des zweiten Satzes von aufeinander folgenden Trägerfrequenzen und/oder zum Bestimmen einer ersten Trägerfrequenz des dritten Satzes von aufeinander folgenden Trägerfrequenzen und/oder zum Bestimmen einer ersten Trägerfrequenz des vierten Satzes von aufeinander folgenden Frequenzen auf der Basis der Kanalinformationen.

11. Vorrichtung gemäß Anspruch 9 oder 10, bei der der Mehrträgermodulator (117; 225) wirksam ist zum simultanen Demodulieren von Werten, die dem ersten Satz von aufeinander folgenden Trägerfrequenzen, dem zweiten Satz von aufeinander folgenden Trägerfrequenzen, dem dritten Satz von aufeinander folgenden Trägerfrequenzen und dem vierten Satz von aufeinander folgenden Trägerfrequenzen zugewiesen sind, um das modulierte Mehrträgersignal zu erhalten.

12. Vorrichtung gemäß einem der vorhergehenden Ansprüche 1 bis 11, bei der der Mehrträgermodulator zum Durchführen einer IFT-, IFFT- oder IDFT-Operation wirksam ist, um das modulierte Mehrträgersignal zu erhalten.

13. Vorrichtung gemäß einem der Ansprüche 1 bis 12, bei der das erste Sendesignal durch eine Sendeantenne einer Gesamtanzahl $n_T$ von Sendeantennen gesendet werden soll, wobei das zweite Sendesignal durch eine weitere Sendeantenne der Gesamtanzahl von Sendeantennen gesendet werden soll, wobei jede Antenne der Gesamtanzahl von Sendeantennen einem Nummerierungsindex größer oder gleich 1 und kleiner oder gleich $n_T$ zugeordnet ist, wobei die Einrichtung (1201) zum Erzeugen des ersten und des zweiten Sendesignals wirksam ist zum Erzeugen einer Kopie des modulierten Mehrträgersignals und zum zyklischen Verschieben der Kopie des modulierten Mehrträgersignals um einen Verschiebungsfaktor $\Delta_n$:

$$\Delta_n = \frac{N_s(n-1)}{n_T} = \frac{N_s}{n_T} + \Delta_{n-1},$$

um das zweite Sendesignal zu erhalten, wobei $N_s$ eine Anzahl von Trägern des Mehrträgermodulationsschemas bezeichnet und n den Nummerierungsindex der weiteren Antenne bezeichnet.

14. Vorrichtung gemäß Anspruch 13, bei der die Einrichtung (1201) zum Erzeugen des ersten und des zweiten Sendesignals wirksam ist zum Erzeugen einer weiteren Kopie des modulierten Mehrträgersignals als die Version des modulierten Mehrträgersignals, wenn ein Nummerierungsindex k der Sendeantenne, die dem zweiten Sendesignal zugeordnet ist, gleich 1 ist, oder um andernfalls die weitere Kopie des modulierten Mehrträgersignals zyklisch um einen Verschiebungsfaktor $\Delta_k$ zu verschieben:

$$\Delta_k = \frac{N_s(k-1)}{n_T} = \frac{N_s}{n_T} + \Delta_{k-1},$$

um die Version des modulierten Mehrträgersignals zu erhalten.

15. Vorrichtung gemäß Anspruch 13 oder 14, bei der die Kopie des modulierten Mehrträgersignals einen Satz von diskreten Werten aufweist, die Nummerierungsindizes zugeordnet sind, die mit einem Wert mit einem niedrigsten Nummerierungsindex beginnen und mit einem Wert mit einem höchsten Ordnungsindex enden, wobei die Einrichtung (1201) zum Erzeugen des ersten und des zweiten Sendesignals ein Verzögerungselement (1213, 1217) aufweist, das zum zyklischen Verschieben der Kopie des modulierten Mehrträgersignals um eine Anzahl von Werten wirksam ist, wobei die Anzahl durch den Verschiebungsfaktor bestimmt ist, derart, dass der letzte Wert vor dem ersten Wert platziert ist, um das zweite Sendesignal zu erhalten.

**16.** Vorrichtung, die eine Einrichtung zum Extrahieren von Werten entsprechend Benutzersignalen aus einem empfangenen modulierten Mehrträgersignal umfasst, das als ein erstes und ein zweites Sendesignal gesendet wird, wobei das erste Sendesignal eine Version des modulierten Mehrträgersignals ist und das zweite Sendesignal eine zyklisch verschobene Version des modulierten Mehrträgersignals ist, wobei das empfangene modulierte Mehrträgersignal gebildet ist durch ein Zuweisen von Werten oder verarbeiteten Werten eines ersten Benutzersignals einem ersten Satz von Trägern mit aufeinander folgenden Trägerfrequenzen, durch ein Zuweisen von Werten eines zweiten Benutzersignals einem zweiten Satz von Trägern mit aufeinander folgenden Trägerfrequenzen, durch ein Zuweisen weiterer Werte des ersten Benutzersignals einem dritten Satz von Trägern mit aufeinander folgenden Trägerfrequenzen und durch ein Zuweisen weiterer Werte des zweiten Benutzersignals einem vierten Satz von Trägern mit aufeinander folgenden Trägerfrequenzen in einem Mehrbenutzerszenario, wobei die Werte, die dem ersten Satz von Werten entsprechen, durch ein Auswählen jedes S-ten des ersten Benutzersignals beginnend mit einem Wert mit einem Ordnungsindex erhalten werden, und wobei die weiteren Werte, die dem dritten Satz von Werten entsprechen, durch ein Auswählen jedes S-ten Werts des ersten Benutzersignals beginnend mit einem Wert mit einem weiteren Ordnungsindex erhalten werden, und/oder wobei die Werte, die dem zweiten Satz von Werten entsprechen, durch ein Auswählen jedes S-ten Werts des zweiten Benutzersignals beginnend mit einem Wert mit einem Ordnungsindex erhalten werden, und wobei die weiteren Werte, die dem vierten Satz von Werten entsprechen, durch ein Auswählen jedes S-ten Werts des zweiten Benutzersignals beginnend mit einem Wert mit einem weiteren Ordnungsindex erhalten werden, wobei S eine Zahl gleich 2 oder größer 2 ist, wobei die Werte, die dem ersten, dem zweiten, dem dritten oder dem vierten Satz von aufeinander folgenden Trägerfrequenzen zugewiesen sind, unter Verwendung eines Mehrträgermodulationsschemas simultan moduliert sind, um ein moduliertes Mehrträgersignal zu erhalten, wobei das modulierte Mehrträgersignal von einer Mehrzahl von Sendepunkten aus gesendet wird, wobei die Vorrichtung ferner folgende Merkmale aufweist:

einen Mehrträgerdemodulator (1313) zum Demodulieren des empfangenen ersten und zweiten modulierten Mehrträgersignals zum Erhalten eines empfangenen Mehrträgersignals, das einen ersten Satz von Werten, die dem ersten Satz von aufeinander folgenden Trägerfrequenzen zugeordnet sind, einen zweiten Satz von Werten, die dem zweiten Satz von aufeinander folgenden Trägerfrequenzen zugewiesen sind, einen dritten Satz von Werten, die dem dritten Satz von aufeinander folgenden Trägerfrequenzen zugewiesen sind, und einen vierten Satz von Werten aufweist, die dem vierten Satz von aufeinander folgenden Trägerfrequenzen zugewiesen sind;
eine Einrichtung (1319) zum Liefern einer Benutzerangabe, um zu signalisieren, ob das erste oder das zweite Benutzersignal extrahiert werden soll;
einen Selektor (1315) zum Auswählen des ersten oder des zweiten oder des dritten oder des vierten Satzes von Werten, um extrahierte Werte des ersten oder des zweiten oder des dritten oder des vierten Satzes von Werten zu erhalten, wobei der Selektor (1315) ferner eine Einrichtung zum Sammeln von Werten des ersten, des zweiten, des dritten oder des vierten Satzes von Werten aufweist, um das erste Benutzersignal oder das zweite Benutzersignal zu erhalten, wobei die Einrichtung zum Sammeln wirksam ist zum Sammeln jedes S-ten Wertes des ersten Benutzersignals aus aufeinander folgenden Werten des ersten oder des dritten Satzes von Werten, oder zum Sammeln jedes S-ten Wertes des zweiten Benutzersignals aus aufeinander folgenden Werten des zweiten oder des vierten Satzes von Werten.

**17.** Vorrichtung gemäß Anspruch 16, bei der der erste Satz von Trägern aufeinander folgende Trägerfrequenzen beginnend mit einer ersten Trägerfrequenz des ersten Satzes von aufeinander folgenden Trägerfrequenzen aufweist, und bei der der zweite Satz von Trägern aufeinander folgende Trägerfrequenzen beginnend mit einer ersten Trägerfrequenz des zweiten Satzes von aufeinander folgenden Trägerfrequenzen aufweist, wobei der Selektor (1315) wirksam ist zum Auswählen des ersten Satzes von Trägern des ersten Benutzersignals durch ein Auswählen aufeinander folgender Träger beginnend mit der ersten Trägerfrequenz des ersten Satzes von Trägern oder zum Auswählen des zweiten Satzes von Trägern des zweiten Benutzersignals durch ein Auswählen aufeinander folgender Träger beginnend mit der ersten Trägerfrequenz des zweiten Satzes von Trägern.

**18.** Vorrichtung gemäß Anspruch 17, bei der die Einrichtung (1319) zum Liefern einer Benutzerangabe wirksam ist zum Liefern einer ersten Trägerfrequenz des ersten Satzes von Trägerfrequenzen, wenn signalisiert wird, dass das erste Benutzersignal extrahiert werden soll, oder zum Liefern der ersten Trägerfrequenz des zweiten Satzes von Trägerfrequenzen, wenn signalisiert wird, dass das zweite Benutzersignal extrahiert werden soll.

**19.** Vorrichtung gemäß einem der Ansprüche 16 bis 18, bei der die Werte, die dem ersten Satz von aufeinander folgenden Werten zugewiesen sind, auf aufeinander folgende Signalraumvertreter von Werten abgebildet sind, die dem ersten Benutzersignal entsprechen, und/oder bei der die Werte, die dem zweiten Satz von aufeinander folgenden Werten zugewiesen sind, aufeinander folgende Signalraumvertreter von Werten sind, die dem zweiten Benutzersignal entsprechen, wobei die aufeinander folgenden Signalraumvertreter zu einer vorbestimmten Signalraumkonstellation gehören, wobei der Selektor (1314) ferner einen Rückwärtsabbilder aufweist zum Rückwärtsabbilden der Werte des ersten Satzes, um Werte zu erhalten, die dem ersten Benutzer entsprechen, oder zum Rückwärtsabbilden der Werte des zweiten Satzes, um Werte zu erhalten, die dem zweiten Benutzer entsprechen.

20. Vorrichtung gemäß Anspruch 19, bei der die Werte, die dem ersten Benutzer entsprechen, und/oder bei der die Werte, die dem zweiten Benutzer entsprechen, verschachtelte Versionen von aufeinander folgenden Werten sind, die dem ersten Benutzer und/oder dem zweiten Benutzer entsprechen, wobei der Selektor (1315) ferner einen Rückwärtsverschachtler aufweist zum Erhalten aufeinander folgender Werte, die dem ersten Benutzer entsprechen, als die extrahierten Werte, die dem ersten Benutzer entsprechen, oder zum Erhalten aufeinander folgender Werte, die dem zweiten Benutzer entsprechen, als die extrahierten Werte, die dem zweiten Benutzer entsprechen.

21. Vorrichtung gemäß Anspruch 19 oder 20, bei der die Werte, die dem ersten Benutzer entsprechen, auf der Basis eines Codierungsschemas codiert sind, und/oder bei der die Werte, die dem zweiten Benutzer entsprechen, auf der Basis des Codierungsschemas codiert sind,
wobei der Selektor (1315) einen Decodierer zum Decodieren der codierten Werte aufweist, die dem ersten oder dem zweiten Benutzer entsprechen.

22. Vorrichtung gemäß einem der Ansprüche 16 bis 21, bei der der dritte Satz von Trägern aufeinander folgende Trägerfrequenzen beginnend mit der ersten Trägerfrequenz des dritten Satzes von aufeinander folgenden Trägerfrequenzen aufweist, und bei der der vierte Satz von Trägern aufeinander folgende Trägerfrequenzen beginnend mit einer ersten Trägerfrequenz des vierten Satzes von Trägerfrequenzen aufweist, wobei der Selektor wirksam ist zum Auswählen des dritten Satzes von Trägern des ersten Benutzersignals durch ein Auswählen aufeinander folgender Träger beginnend mit einer ersten Trägerfrequenz des dritten Satzes von Trägern oder zum Auswählen des vierten Satzes von Trägern des zweiten Benutzersignals durch ein Auswählen aufeinander folgender Träger beginnend mit einer ersten Trägerfrequenz des vierten Satzes von Trägern.

23. Vorrichtung gemäß Anspruch 22, bei der die Einrichtung (1319) zum Liefern einer Benutzerangabe wirksam ist zum Liefern der ersten Trägerfrequenz des dritten Satzes von Trägerfrequenzen, wenn signalisiert wird, dass das erste Benutzersignal extrahiert werden soll, oder zum Liefern der ersten Trägerfrequenz des vierten Satzes von Trägerfrequenzen, wenn signalisiert wird, dass das zweite Benutzersignal extrahiert werden soll.

24. Vorrichtung gemäß einem der Ansprüche 16 bis 23, bei der die weiteren Werte, die dem dritten Satz von aufeinander folgenden Werten zugewiesen sind, auf aufeinander folgende Signalraumvertreter von weiteren Werten abgebildet sind, die dem ersten Benutzersignal entsprechen, und/oder bei der die weiteren Werte, die dem vierten Satz von aufeinander folgenden Werten zugewiesen sind, aufeinander folgende weitere Signalraumvertreter von weiteren Werten sind, die dem zweiten Benutzersignal entsprechen, wobei die aufeinander folgenden Signalraumvertreter zu einer vorbestimmten Signalraumkonstellation gehören, wobei der Selektor (1314) ferner einen weiteren Rückwärtsabbilder aufweist zum Rückwärtsabbilden der Werte des dritten Satzes, um Werte zu erhalten, die dem ersten Benutzer entsprechen, oder zum Rückwärtsabbilden der Werte des vierten Satzes, um Werte zu erhalten, die dem zweiten Benutzer entsprechen.

25. Vorrichtung gemäß Anspruch 24, bei der die weiteren Werte, die dem ersten Benutzer entsprechen, und/oder bei der die weiteren Werte, die dem zweiten Benutzer entsprechen, verschachtelte Versionen weiterer aufeinander folgender Werte sind, die dem ersten Benutzer und/oder dem zweiten Benutzer entsprechen, wobei der Selektor (1315) einen weiteren Rückwärtsverschachtler aufweist zum Erhalten der weiteren aufeinander folgenden Werte, die dem ersten Benutzer entsprechen, oder zum Erhalten der weiteren aufeinander folgenden Werte, die dem zweiten Benutzer entsprechen.

26. Vorrichtung gemäß Anspruch 24 oder 25, bei der die weiteren Werte, die dem ersten Benutzer entsprechen, auf der Basis eines Codierungsschemas codiert sind, und/oder bei der die weiteren Werte, die dem zweiten Benutzer entsprechen, auf der Basis des Codierungsschemas codiert sind, wobei der Selektor (1315) einen weiteren Decodierer zum Decodieren der codierten Werte aufweist, die dem ersten oder dem zweiten Benutzer entsprechen.

27. Verfahren zum Erzeugen eines ersten und eines zweiten Sendesignals aus einem modulierten Mehrträgersignal aus einem ersten Benutzersignal und aus einem zweiten Benutzersignal unter Verwendung eines Mehrträgermodulationsschemas mit einer Anzahl von Trägern mit aufeinander folgenden Trägerfrequenzen, mit folgenden Schritten:

Empfangen des ersten Benutzersignals und des zweiten Benutzersignals;

Auswählen jedes S-ten Werts des ersten Benutzersignals beginnend mit einem Wert mit einem Ordnungsindex, um Werte des ersten Benutzersignals zu erhalten, Auswählen jedes S-ten Werts des ersten Benutzersignals beginnend mit einem weiteren Wert mit einem weiteren Ordnungsindex, um weitere Werte des ersten Benutzersignals zu erhalten, Auswählen jedes S-ten Werts des zweiten Benutzersignals beginnend mit einem Wert mit einem Ordnungsindex, um Werte des zweiten Benutzersignals zu erhalten, und Auswählen jedes S-ten Werts des zweiten Benutzersignals beginnend mit einem weiteren Wert mit einem weiteren Ordnungsindex, um weitere Werte des zweiten Benutzersignals zu erhalten, wobei S eine Zahl größer oder gleich 2 ist;

Zuweisen von Werten des ersten Benutzersignals oder von verarbeiteten Werten des ersten Benutzersignals einem ersten Satz von Trägern mit aufeinander folgenden Trägerfrequenzen, und Zuweisen weiterer Werte des ersten Benutzersignals einem dritten Satz von Trägern mit aufeinander folgenden Trägerfrequenzen;

Zuweisen von Werten des zweiten Benutzersignals oder von verarbeiteten Werten des zweiten Benutzersignals einem zweiten Satz von Trägern mit aufeinander folgenden Trägerfrequenzen, und Zuweisen weiterer Werte des zweiten Benutzersignals einem vierten Satz von Trägern mit aufeinander folgenden Trägerfrequenzen;

simultanes Modulieren von Werten, die dem ersten, dem zweiten, dem dritten oder dem vierten Satz von aufeinander folgenden Trägerfrequenzen zugewiesen sind, um das modulierte Mehrträgersignal zu erhalten, unter Verwendung eines Mehrträgermodulationsschemas;

Erzeugen einer Version des modulierten Mehrträgersignals als das erste Sendesignal; und

Erzeugen einer zyklisch verschobenen Version des modulierten Mehrträgersignals als das zweite Sendesignal.

28. Verfahren zum Extrahieren von Werten entsprechend Benutzersignalen aus einem empfangenen modulierten Mehrträgersignal, das als ein erstes und ein zweites Sendesignal gesendet wird, wobei das erste Sendesignal eine Version des modulierten Mehrträgersignals ist und das zweite Sendesignal eine zyklisch verschobene Version des modulierten Mehrträgersignals ist, wobei das empfangene modulierte Mehrträgersignal gebildet ist durch ein Zuweisen von Werten oder verarbeiteten Werten eines ersten Benutzersignals einem ersten Satz von Trägern mit aufeinander folgenden Trägerfrequenzen, durch ein Zuweisen von Werten eines zweiten Benutzersignals einem zweiten Satz von Trägern mit aufeinander folgenden Trägerfrequenzen, durch ein Zuweisen weiterer Werte des ersten Benutzersignals einem dritten Satz von Trägern mit aufeinander folgenden Trägerfrequenzen und durch ein Zuweisen weiterer Werte des zweiten Benutzersignals einem vierten Satz von Trägern mit aufeinander folgenden Trägerfrequenzen in einem Mehrbenutzerszenario, wobei die Werte, die dem ersten Satz von Werten entsprechen, durch ein Auswählen jedes S-ten Werts des ersten Benutzersignals beginnend mit einem Wert mit einem Ordnungsindex erhalten werden, und wobei die weiteren Werte, die dem dritten Satz von Werten entsprechen, durch ein Auswählen jedes S-ten Werts des ersten Benutzersignals beginnend mit einem Wert mit einem weiteren Ordnungsindex erhalten werden, und/oder wobei die Werte, die dem zweiten Satz von Werten entsprechen, durch ein Auswählen jedes S-ten Werts des zweiten Benutzersignals beginnend mit einem Wert mit einem Ordnungsindex erhalten werden, und wobei die weiteren Werte, die dem vierten Satz von Werten entsprechen, durch ein Auswählen jedes S-ten Werts des zweiten Benutzersignals beginnend mit einem Wert mit einem weiteren Ordnungsindex erhalten werden, wobei S eine Zahl gleich 2 oder größer 2 ist, wobei die Werte, die dem ersten, dem zweiten, dem dritten oder dem vierten Satz von aufeinander folgenden Trägerfrequenzen zugewiesen sind, unter Verwendung eines Mehrträgermodulationsschemas simultan moduliert sind, um ein moduliertes Mehrträgersignal zu erhalten, wobei das modulierte Mehrträgersignal von einer Mehrzahl von Sendepunkten aus gesendet wird, mit folgenden Schritten:

Empfangen der empfangenen Mehrträgersignale;

Demodulieren des empfangenen ersten und zweiten modulierten Mehrträgersignals zum Erhalten eines empfangenen Mehrträgersignals, das einen ersten Satz von Werten, die dem ersten Satz von aufeinander folgenden Trägerfrequenzen zugeordnet sind, einen zweiten Satz von Werten, die dem zweiten Satz von aufeinander folgenden Trägerfrequenzen zugewiesen sind, einen dritten Satz von Werten, die dem dritten Satz von aufeinander folgenden Trägerfrequenzen zugewiesen sind, und einen vierten Satz von Werten aufweist, die dem vierten Satz von aufeinander folgenden Trägerfrequenzen zugewiesen sind;

Liefern einer Benutzerangabe, um zu signalisieren, ob das erste oder das zweite Benutzersignal extrahiert werden soll;

Auswählen des ersten oder des zweiten oder des dritten oder des vierten Satzes von Werten, um extrahierte Werte des ersten oder des zweiten oder des dritten oder des vierten Satzes von Werten zu erhalten; und

Sammeln jedes S-ten Wertes des ersten Benutzersignals aus aufeinander folgenden Werten des ersten oder des dritten Satzes von Werten, oder Sammeln jedes S-ten Wertes des zweiten Benutzersignals aus aufeinander folgenden Werten des zweiten oder des vierten Satzes von Werten.

**29.** Computerprogramm mit einem Programmcode zum Durchführen der Verfahren gemäß Anspruch 27 oder 28, wenn das Programm auf einem Computer läuft.

**Revendications**

**1.** Appareil pour générer un premier et un deuxième signal de transmission à partir d'un signal modulé à porteuses multiples à partir d'un premier signal d'utilisateur et d'un deuxième signal d'utilisateur à l'aide d'un schéma de modulation à porteuses multiples ayant un nombre de porteuses à fréquences porteuses successives, comprenant:

une entrée (101) destinée à recevoir le premier signal d'utilisateur et le deuxième signal d'utilisateur;
un moyen d'attribution (115; 223; 337) destiné à attribuer des valeurs du premier signal d'utilisateur ou des valeurs traitées du premier signal d'utilisateur à un premier ensemble de porteuses ayant des fréquences porteuses successives, à attribuer des valeurs du deuxième signal d'utilisateur ou des valeurs traitées du deuxième signal d'utilisateur à un deuxième ensemble de porteuses ayant des fréquences porteuses successives, à attribuer d'autres valeurs du premier signal d'utilisateur à un troisième ensemble de porteuses ayant des fréquences porteuses successives et à attribuer d'autres valeurs du deuxième signal d'utilisateur à un quatrième ensemble de porteuses ayant des fréquences porteuses successives;
un modulateur de porteuses multiples (117; 225) destiné à moduler simultanément les valeurs attribuées au premier, au deuxième, au troisième et au quatrième ensemble de fréquences porteuses successives, pour obtenir le signal modulé de porteuses multiples; et
un moyen (1201) destiné à générer le premier et le deuxième signal de transmission, dans lequel le moyen (1201) destiné à générer le premier et le deuxième signal de transmission est opérationnel pour générer une version du signal modulé à porteuses multiples comme premier signal de transmission, et
pour générer une version cycliquement décalée du signal modulé à porteuses multiples comme deuxième signal de transmission;
dans lequel
l'entrée comprend une première borne d'entrée (103) destinée à recevoir uniquement le premier signal d'utilisateur et à fournir au moyen d'attribution (115; 223, 337) des valeurs du premier signal d'utilisateur ou des valeurs traitées du premier signal d'utilisateur, et une deuxième borne d'entrée (105) destinée à recevoir uniquement le deuxième signal d'utilisateur et à fournir au moyen d'attribution (115; 223, 337) des valeurs ou des valeurs traitées du deuxième signal d'utilisateur, dans lequel la première borne d'entrée (103) comprend un premier sélecteur (301) destiné à fournir des valeurs du signal d'utilisateur en sélectionnant chaque Sème valeur du premier signal d'utilisateur en commençant par une valeur ayant un indice d'ordre, et à fournir d'autres valeurs du premier signal d'utilisateur en sélectionnant chaque Sème valeur du premier signal d'utilisateur en commençant par une autre valeur ayant un autre indice d'ordre, et
dans lequel la deuxième borne d'entrée (105) comprend un deuxième sélecteur (319) destiné à fournir des valeurs du deuxième signal d'utilisateur en sélectionnant chaque S$^{\text{ème}}$ valeur du deuxième signal d'utilisateur en commençant par une valeur ayant un indice d'ordre et à fournir d'autres valeurs du deuxième signal d'utilisateur en sélectionnant chaque Sème valeur du deuxième signal d'utilisateur en commençant par une autre valeur ayant un autre indice d'ordre, et
dans lequel S est un nombre égal ou supérieur à 2.

**2.** Appareil selon la revendication 1, dans lequel la première borne d'entrée (103) comprend un premier codeur (207) destiné à coder des valeurs du premier signal d'utilisateur et à fournir des valeurs codées du premier signal d'utilisateur comme valeurs du premier signal d'utilisateur, et dans lequel la deuxième borne d'entrée (105) comprend un deuxième codeur (215) destiné à coder des valeurs du deuxième signal d'utilisateur et à fournir des valeurs codées du deuxième signal d'utilisateur comme valeurs du deuxième signal d'utilisateur.

**3.** Appareil selon la revendication 1 ou 2, dans lequel la première borne d'entrée (103) comprend un moyen d'entremêlement (209) destiné à entremêler les valeurs du premier signal d'utilisateur et à fournir les valeurs entremêlées du premier signal d'utilisateur comme valeurs du premier signal d'utilisateur, et
dans lequel la deuxième borne d'entrée (105) comprend un moyen d'entremêlement (217) destiné à entremêler les valeurs du premier signal d'utilisateur et à fournir les valeurs entremêlées du premier signal d'utilisateur comme valeurs du premier signal d'utilisateur.

**4.** Appareil selon les revendications 1 à 3, dans lequel la première borne d'entrée (103) comprend un moyen de mappage (211) destiné à effectuer un mappage des valeurs successives du premier signal d'utilisateur pour un nombre de représentants d'espace de signal successifs d'une constellation d'espace de signal prédéterminée, pour obtenir le nombre de représentants d'espace de signal successifs du premier signal d'utilisateur comme valeurs traitées du premier signal d'utilisateur, et
dans lequel la deuxième borne d'entrée (105) comprend un moyen de mappage (219) destiné à effectuer un mappage des valeurs successives du deuxième signal d'utilisateur pour un nombre de représentants d'espace de signal successifs d'une constellation d'espace de signal prédéterminée, pour obtenir le nombre de représentants d'espace de signal successifs du deuxième signal d'utilisateur comme valeurs traitées du deuxième signal d'utilisateur.

**5.** Appareil selon la revendication 1, dans lequel la première borne d'entrée (103) comprend un moyen d'entremêlement (307) destiné à effectuer un entremêlement des valeurs du premier signal d'utilisateur, pour obtenir des valeurs entremêlées du premier signal d'utilisateur comme valeurs du premier signal d'utilisateur, et dans lequel la première borne d'entrée (103) comprend un autre moyen d'entremêlement (309) destiné à entremêler les autres valeurs du premier signal d'utilisateur, pour obtenir d'autres valeurs entremêlées du premier signal d'utilisateur comme valeurs du premier signal d'utilisateur,
dans lequel la deuxième borne d'entrée (105) comprend un moyen d'entremêlement (325) destiné à entremêler les valeurs du deuxième signal d'utilisateur, pour obtenir des valeurs entremêlées du deuxième signal d'utilisateur comme valeurs du deuxième signal d'utilisateur, et dans lequel la deuxième borne d'entrée (105) comprend un autre moyen d'entremêlement (327) destiné à entremêler les autres valeurs du deuxième signal d'utilisateur, pour obtenir d'autres valeurs entremêlées du deuxième signal d'utilisateur comme valeurs du deuxième signal d'utilisateur.

**6.** Appareil selon les revendications 1 à 5, dans lequel la première borne d'entrée (103) comprend un moyen de mappage (311) destiné à effectuer un mappage des valeurs du premier signal d'utilisateur sur le nombre de représentants d'espace de signal successifs d'une constellation d'espace de signal prédéterminée, pour obtenir le nombre de représentants d'espace de signal successifs des valeurs du premier signal d'utilisateur comme valeurs traitées du premier signal d'utilisateur,
dans lequel la première borne d'entrée (103) comprend un autre moyen de mappage (303) destiné à effectuer un mappage des valeurs du premier signal d'utilisateur sur le nombre de représentants d'espace de signal successifs d'une constellation d'espace de signal prédéterminée, pour obtenir le nombre d'autres représentants d'espace de signal successifs des autres valeurs du premier signal d'utilisateur comme autres valeurs traitées du premier signal d'utilisateur, et
dans lequel la deuxième borne d'entrée (105) comprend un moyen de mappage (329) destiné à effectuer un mappage des valeurs du deuxième signal d'utilisateur sur le nombre de représentants d'espace de signal successifs d'une constellation d'espace de signal prédéterminée, pour obtenir le nombre de représentants d'espace de signal successifs des valeurs du deuxième signal d'utilisateur comme valeurs traitées du deuxième signal d'utilisateur, et dans lequel la deuxième borne d'entrée (105) comprend un autre moyen de mappage (331) destiné à effectuer un mappage des valeurs du deuxième signal d'utilisateur sur le nombre de représentants d'espace de signal successifs d'une constellation d'espace de signal prédéterminée, pour obtenir le nombre de représentants d'espace de signal successifs des valeurs du deuxième signal d'utilisateur comme valeurs traitées du deuxième signal d'utilisateur.

**7.** Appareil selon les revendications 1 à 6, dans lequel la constellation d'espace de signal prédéterminée appartient à un schéma PSK, un schéma QAM ou un schéma PAM.

**8.** Appareil selon l'une quelconque des revendications précédentes 1 à 7, comprenant par ailleurs un moyen destiné à fournir des informations de canal relatifs à une caractéristique de canal dans une largeur de bande déterminée par un nombre de porteuses du schéma de modulation à porteuses multiples, dans lequel le moyen d'attribution (115; 223; 337) est opérationnel pour déterminer une première fréquence porteuse du premier ensemble de fréquences porteuses successives et/ou pour déterminer une deuxième fréquence porteuse du deuxième ensemble de fréquences porteuses successives sur base des informations de canal.

**9.** Appareil selon les revendications 1 à 7, dans lequel le moyen d'attribution (115; 223; 337) est opérationnel pour attribuer des valeurs du premier signal d'utilisateur au premier ensemble de porteuses ayant des fréquences porteuses successives, pour attribuer d'autres valeurs du premier signal d'utilisateur à un troisième ensemble de porteuses ayant des fréquences porteuses successives, pour attribuer des valeurs du deuxième signal d'utilisateur au deuxième ensemble de fréquences porteuses et pour attribuer les autres valeurs du deuxième signal d'utilisateur à un quatrième ensemble de fréquences porteuses ayant des fréquences porteuses successives.

10. Appareil selon la revendication 9, comprenant par ailleurs un moyen destiné à fournir des informations de canal relatifs à une caractéristique de canal dans une largeur de bande déterminée par le nombre de porteuses du schéma de modulation à porteuses multiples, dans lequel le moyen d'attribution est opérationnel pour déterminer une première fréquence porteuse du premier ensemble de fréquences porteuses successives, et/ou pour déterminer une fréquence porteuse du deuxième ensemble de fréquences porteuses successives, et/ou pour déterminer une première fréquence porteuse du troisième ensemble de fréquences porteuses successives et/ou pour déterminer une première fréquence porteuse du quatrième ensemble de fréquences successives sur base des informations de canal.

11. Appareil selon les revendications 9 à 10, dans lequel le modulateur à porteuses multiples (117; 225) est opérationnel pour démoduler simultanément les valeurs attribuées au premier ensemble de fréquences porteuses successives, au deuxième ensemble de fréquences porteuses successives, au troisième ensemble de fréquences porteuses successives et au quatrième ensemble de fréquences porteuses successives, pour obtenir le signal modulé à porteuses multiples.

12. Appareil selon l'une quelconque des revendications précédentes 1 à 11, dans lequel le modulateur à porteuses multiples est opérationnel pour effectuer une opération IFT, IFFT ou IDFT, pour obtenir le signal modulé à porteuses multiples.

13. Appareil selon l'une des revendications 1 à 12, dans lequel le premier signal de transmission doit être transmis par une antenne de transmission d'un nombre total $n_T$ d'antennes de transmission, dans lequel le deuxième signal de transmission doit être transmis par une antenne de transmission du nombre total d'antennes de transmission, dans lequel chaque antenne du nombre total d'antennes de transmission est associée à un indice de numérotation égal ou supérieur à 1 et égale ou inférieur à $n_T$, dans lequel le moyen (1201) destiné à générer le premier et le deuxième signal de transmission est opérationnel pour générer une copie du signal modulé à porteuses multiples et pour décaler cycliquement la copie du signal modulé à porteuses multiples d'un facteur de décalage $\Delta_n$:

$$\Delta_n = \frac{N_s(n-1)}{n_T} = \frac{N_s}{n_T} + \Delta_{n-1}$$

pour obtenir le deuxième signal de transmission, où $N_s$ désigne un nombre de porteuses du schéma de modulation à porteuses multiples et n désigne l'indice de numérotation de l'autre antenne.

14. Appareil selon la revendication 13, dans lequel le moyen (1201) destiné à générer le premier et le deuxième signal de transmission est opérationnel pour générer une autre copie du signal modulé à porteuses multiples comme la version de signal modulé à porteuses multiples lorsqu'un indice de numérotation k de l'antenne de transmission associée au deuxième signal de transmission est égal à 1, ou sinon à décaler cycliquement l'autre copie du signal modulé à porteuses multiples d'un facteur de décalage $\Delta_k$:

$$\Delta_k = \frac{N_s(k-1)}{n_T} = \frac{N_s}{n_T} + \Delta_{k-1}$$

pour obtenir la version du signal modulé à porteuses multiples.

15. Appareil selon la revendication 13 ou 14, dans lequel la copie du signal modulé à porteuses multiples comprend un ensemble de valeurs discrètes associées avec des indices de numérotation en commençant par une valeur ayant un indice de numérotation le plus bas et se terminant par une valeur ayant un indice d'ordre le plus élevé, dans lequel le moyen (1201) destiné à générer le premier et le deuxième signal de transmission comprend un élément de temporisation (1213, 1217) opérationnel pour décaler cycliquement la copie du signal modulé à porteuses multiples d'un nombre de valeurs, le nombre étant déterminé par le facteur de décalage de sorte que la dernière valeur soit placée avant la première valeur, pour obtenir le deuxième signal de transmission.

**16.** Appareil comportant un moyen destiné à extraire des valeurs correspondant à des signaux d'utilisateur d'un signal modulé à porteuses multiples reçu transmis comme premier et deuxième signal de transmission, le premier signal de transmission étant une version du signal modulé à porteuses multiples et le deuxième signal de transmission étant une version cycliquement décalée du signal modulé à porteuses multiples, le signal modulé à porteuses multiples reçu étant formé en attribuant des valeurs ou des valeurs traitées du premier signal d'utilisateur à un premier ensemble de porteuses ayant des fréquences porteuses successives, en attribuant des valeurs d'un deuxième signal d'utilisateur à un ensemble de porteuses ayant des fréquences porteuses successives, en attribuant d'autres valeurs du premier signal d'utilisateur à un troisième ensemble de porteuses ayant des fréquences porteuses successives, et en attribuant d'autres valeurs du deuxième signal d'utilisateur à un quatrième ensemble de porteuses ayant des fréquences porteuses successives dans un scénario à utilisateurs multiples, dans lequel les valeurs correspondant au premier ensemble de valeurs sont obtenues en sélectionnant chaque Sème valeur du premier signal d'utilisateur en commençant par une valeur ayant un indice d'ordre, et dans lequel les autres valeurs correspondant au troisième ensemble de valeurs sont obtenues en sélectionnant chaque $S^{ème}$ valeur du premier signal d'utilisateur en commençant par une valeur ayant un autre indice d'ordre, et/ou dans lequel les valeurs correspondant au deuxième ensemble de valeurs sont obtenues en sélectionnant chaque $S^{ème}$ valeur du deuxième signal d'utilisateur en commençant par une valeur ayant un indice d'ordre, et dans lequel les autres valeurs correspondant au quatrième ensemble de valeurs sont obtenues en sélectionnant chaque Sème valeur du deuxième signal d'utilisateur en commençant par une valeur ayant un autre indice d'ordre, où S est un nombre égal à 2 ou supérieur à 2, les valeurs attribuées au premier, au deuxième, au troisième ou au quatrième ensemble de fréquences porteuses successives étant simultanément modulées à l'aide d'un schéma de modulation à porteuses multiples, pour obtenir un signal modulé à porteuses multiples, le signal modulé à porteuses multiples étant transmis à partir d'une pluralité de points de transmission, l'appareil comprenant par ailleurs :

un démodulateur à porteuses multiples (1313) destiné à démoduler les premier et deuxième signaux modulés à porteuses multiples reçus, pour obtenir un signal à porteuses multiples reçu comprenant un premier ensemble de valeurs associés au premier ensemble de fréquences porteuses successives, un deuxième ensemble de valeurs associées au deuxième ensemble de fréquences porteuses successives, un troisième ensemble de valeurs associées au troisième ensemble de fréquences porteuses successives et un quatrième ensemble de valeurs associées au quatrième ensemble de fréquences porteuses successives ;

un moyen (1319) destiné à fournir une indication d'utilisateur pour signaler si le premier ou le deuxième signal d'utilisateur doit être extrait ;

un sélecteur (1315) destiné à sélectionner le premier ou deuxième ou troisième ou quatrième ensemble de valeurs, pour obtenir des valeurs extraites du premier ou deuxième ou troisième ou quatrième ensemble de valeurs, dans lequel le sélecteur (1315) comprend par ailleurs un moyen destiné à collecter des valeurs du premier, deuxième, troisième ou quatrième ensemble de valeurs, pour obtenir le premier signal d'utilisateur ou le deuxième signal d'utilisateur, le moyen destiné à collecter étant opérationnel pour collecter chaque $S^{ème}$ valeur du premier signal d'utilisateur à partir de valeurs successives du premier ou du troisième ensemble de valeurs, ou pour collecter chaque Sème valeur du deuxième signal d'utilisateur à partir de valeurs successives du deuxième ou quatrième ensemble de valeurs.

**17.** Appareil selon la revendication 16, dans lequel le premier ensemble de porteuses comprend des fréquences porteuses successives en commençant par une première fréquence porteuse du premier ensemble de fréquences porteuses successives, et dans lequel le deuxième ensemble de porteuses comprend des fréquences porteuses successives en commençant par une première fréquence porteuse du deuxième ensemble de fréquences porteuses successives, dans lequel le sélecteur (1315) est opérationnel pour sélectionner le premier ensemble de porteuses du premier signal d'utilisateur en sélectionnant des porteuses successives en commençant par la première fréquence porteuse du premier ensemble de porteuses ou pour sélectionner le deuxième ensemble de porteuses du deuxième signal d'utilisateur en sélectionnant des porteuses successives en commençant par la première fréquence porteuse du deuxième ensemble de porteuses.

**18.** Appareil selon la revendication 17, dans lequel le moyen (1319) destiné à fournir l'indication d'utilisateur est opérationnel pour fournir une première fréquence porteuse du premier ensemble de fréquences porteuses lors de la signalisation que le premier signal d'utilisateur doit être extrait, ou à fournir la première fréquence porteuse du deuxième ensemble de fréquences porteuses lors de la signalisation que le deuxième signal d'utilisateur doit être extrait.

**19.** Appareil selon les revendications 16 à 18, dans lequel il est effectué un mappage des valeurs attribuées au premier ensemble de valeurs successives sur des représentants d'espace de signal successifs des valeurs correspondant au premier signal d'utilisateur, et/ou dans lequel les valeurs attribuées au deuxième ensemble de valeurs successives sont des représentants d'espace de signal successifs de valeurs correspondant au deuxième signal d'utilisateur, dans lequel les représentants d'espace de signal successifs appartiennent à une constellation d'espace de signal prédéterminée, le sélecteur (1315) comprenant par ailleurs un moyen pour défaire le mappage destiné à défaire le mappage des valeurs du premier ensemble, pour obtenir des valeurs correspondant au premier utilisateur ou à défaire le mappage des valeurs du deuxième ensemble, pour obtenir des valeurs correspondant au deuxième utilisateur.

20. Appareil selon la revendication 19, dans lequel les valeurs correspondant au premier utilisateur et/ou dans lequel les valeurs correspondant au deuxième utilisateur sont des versions entremêlées de valeurs successives correspondant au premier utilisateur et/ou au deuxième utilisateur, le sélecteur (1315) comprenant par ailleurs un moyen pour défaire l'entremêlement, pour obtenir des valeurs successives correspondant au premier utilisateur comme valeurs extraites correspondant au premier utilisateur ou pour obtenir des valeurs successives correspondant au deuxième utilisateur comme valeurs extraites correspondant au deuxième utilisateur.

21. Appareil selon la revendication 19 ou 20, dans lequel les valeurs correspondant au premier utilisateur sont codées sur base d'un schéma de codage, et/ou dans lequel les valeurs correspondant au deuxième utilisateur sont codées sur base du schéma de codage,
dans lequel le sélecteur (1315) comprend un décodeur destiné à décoder les valeurs codées correspondant au premier ou au deuxième utilisateur.

22. Appareil selon les revendications 16 à 21, dans lequel le troisième ensemble de porteuses comprend des fréquences porteuses successives commençant par la première fréquence porteuse du troisième ensemble de fréquences porteuses successives, et dans lequel le quatrième ensemble de porteuses comprend des fréquences porteuses successives commençant par une première fréquence porteuse du quatrième ensemble de fréquences porteuses, dans lequel le sélecteur est opérationnel pour sélectionner le troisième ensemble de porteuses du premier signal d'utilisateur en sélectionnant des porteuses successives en commençant par une première fréquence porteuse du troisième ensemble de porteuses ou pour sélectionner le quatrième ensemble de porteuses du deuxième signal d'utilisateur en sélectionnant des porteuses successives en commençant par une première fréquence porteuse du quatrième ensemble de porteuses.

23. Appareil selon la revendication 22, dans lequel le moyen (1319) destiné à fournir l'indication d'utilisateur est opérationnel pour fournir la première fréquence porteuse du troisième ensemble de fréquences porteuses lors de la signalisation que le premier signal d'utilisateur doit être extrait, ou pour fournir la première fréquence porteuse du quatrième ensemble de fréquences porteuses lors de la signalisation que le deuxième signal d'utilisateur doit être extrait.

24. Appareil selon les revendications 16 à 23, dans lequel il est effectué un mappage des autres valeurs attribuées au troisième ensemble de valeurs successives sur des représentants d'espace de signal successifs d'autres valeurs correspondant au premier signal d'utilisateur, et/ou dans lequel les autres valeurs attribuées au quatrième ensemble de valeurs successives sont d'autres représentants d'espace de signal successifs d'autres valeurs correspondant au deuxième signal d'utilisateur, dans lequel les représentants d'espace de signal successifs appartiennent à une constellation d'espace de signal prédéterminée, le sélecteur (1315) comprenant par ailleurs un autre moyen pour défaire le mappage destiné à défaire le mappage des valeurs du troisième ensemble, pour obtenir des valeurs correspondant au premier utilisateur, ou pour défaire le mappage des valeurs du quatrième ensemble, pour obtenir les valeurs correspondant au deuxième utilisateur.

25. Appareil selon la revendication 24, dans lequel les autres valeurs correspondant au premier utilisateur et/ou dans lequel les autres valeurs correspondant au deuxième utilisateur sont des versions entremêlées d'autres valeurs successives correspondant au premier utilisateur et/ou au deuxième utilisateur, le sélecteur (1315) comprenant un autre moyen pour défaire l'entremêlement, pour obtenir les autres valeurs correspondant au premier utilisateur ou pour obtenir les autres valeurs successives correspondant au deuxième utilisateur.

26. Appareil selon la revendication 24 ou 25, dans lequel les autres valeurs correspondant au premier utilisateur sont codées sur base d'un schéma de codage, et/ou dans lequel les autres valeurs correspondant au deuxième utilisateur sont codées sur base du schéma de codage, dans lequel le sélecteur (1315) comprend un autre décodeur destiné à décoder les valeurs codées correspondant au premier ou au deuxième utilisateur.

**27.** Procédé pour générer un premier et un deuxième signal de transmission à partir d'un signal modulé à porteuses multiples à partir d'un premier signal d'utilisateur et d'un deuxième signal d'utilisateur à l'aide d'un schéma de modulation à porteuses multiples ayant un nombre de porteuses avec des fréquences porteuses successives, comprenant les étapes suivantes consistant à:

recevoir le premier signal d'utilisateur et le deuxième signal d'utilisateur;
sélectionner chaque S<sup>ème</sup> valeur du premier signal d'utilisateur en commençant par une valeur ayant un indice d'ordre, pour obtenir des valeurs du premier signal d'utilisateur, sélectionner chaque S<sup>ème</sup> valeur du premier signal d'utilisateur en commençant par une autre valeur ayant un autre indice d'ordre, pour obtenir d'autres valeurs du premier signal d'utilisateur, sélectionner chaque S<sup>ème</sup> valeur du deuxième signal d'utilisateur en commençant par une valeur ayant un indice d'ordre, pour obtenir des valeurs du deuxième signal d'utilisateur, et sélectionner chaque S<sup>ème</sup> valeur du deuxième signal d'utilisateur en commençant par une autre valeur ayant un autre indice d'ordre, pour obtenir d'autres valeurs du deuxième signal d'utilisateur, où S est un nombre égal ou supérieur à 2;
attribuer des valeurs du premier signal d'utilisateur ou des valeurs traitées du premier signal d'utilisateur à un premier ensemble de porteuses ayant des fréquences porteuses successives, et attribuer d'autres valeurs du premier signal d'utilisateur à un troisième ensemble de porteuses ayant des fréquences porteuses successives;
attribuer des valeurs du deuxième signal d'utilisateur ou des valeurs traitées du deuxième signal d'utilisateur à un deuxième ensemble de porteuses ayant des fréquences porteuses successives, et attribuer d'autres valeurs du deuxième signal d'utilisateur à un quatrième ensemble de porteuses ayant des fréquences porteuses successives;
moduler simultanément les valeurs attribuées au premier, deuxième, troisième ou quatrième ensemble de fréquences porteuses successives, pour obtenir le signal modulé à porteuses multiples à l'aide d'un schéma de modulation à porteuses multiples;
générer une version du signal modulé à porteuses multiples comme premier signal de transmission; et
générer une version décalée cycliquement du signal modulé à porteuses multiples comme deuxième signal de transmission.

**28.** Procédé pour extraire des valeurs correspondant aux signaux d'un signal modulé à porteuses multiples reçu transmis comme premier et deuxième signal de transmission, le premier signal de transmission étant une version du signal modulé à porteuses multiples et le deuxième signal de transmission étant une version décalée cycliquement du signal modulé à porteuses multiples, le signal modulé à porteuses multiples reçu étant formé en attribuant des valeurs ou des valeurs traitées d'un premier signal d'utilisateur à un ensemble de porteuses ayant des fréquences porteuses successives, en attribuant des valeurs d'un deuxième signal d'utilisateur à un deuxième ensemble de porteuses ayant des fréquences porteuses successives, en attribuant d'autres valeurs du premier signal d'utilisateur à un troisième ensemble de porteuses ayant des fréquences porteuses successives, et en attribuant d'autres valeurs du deuxième signal d'utilisateur à un quatrième ensemble de fréquences ayant des fréquences porteuses successives dans un scénario à utilisateurs multiples, dans lequel les valeurs correspondant au premier ensemble de valeurs sont obtenues en sélectionnant chaque S<sup>ème</sup> valeur du premier signal d'utilisateur en commençant par une valeur ayant un indice d'ordre, et dans lequel les autres valeurs correspondant au troisième ensemble de valeurs sont obtenues en sélectionnant chaque S<sup>ème</sup> valeur du premier signal d'utilisateur en commençant par une valeur ayant un autre indice d'ordre, et/ou dans lequel les valeurs correspondant au deuxième ensemble de valeurs sont obtenues en sélectionnant chaque S<sup>ème</sup> valeur du deuxième signal d'utilisateur en commençant par une valeur ayant un indice d'ordre, et dans lequel les autres valeurs correspondant au quatrième ensemble de valeurs sont obtenues en sélectionnant chaque S<sup>ème</sup> valeur du deuxième signal d'utilisateur en commençant par un valeur ayant un autre indice d'ordre, où S est un nombre égal à 2 ou supérieur à 2, les valeurs attribuées au premier, deuxième, troisième ou quatrième ensemble de fréquences porteuses successives étant modulées simultanément à l'aide d'un schéma de modulation à porteuses multiples, pour obtenir un signal modulé à porteuses multiples, le signal modulé à porteuses multiples étant transmis à partir d'une pluralité de points de transmission, comprenant les étapes suivantes consistant à:

recevoir les signaux à porteuses multiples reçus;
démoduler les premier et deuxième signaux modulés à porteuses multiples, pour obtenir un signal à porteuses multiples reçu comprenant un premier ensemble de valeurs associées avec le premier ensemble de fréquences porteuses successives, un deuxième ensemble de valeurs associées au deuxième ensemble de fréquences porteuses successives, un troisième ensemble de valeurs associées au troisième ensemble de fréquences porteuses successives et un quatrième ensemble de valeurs associées au quatrième ensemble de fréquences porteuses successives;

fournir une indication d'utilisateur, pour signaler si le premier ou le deuxième signal d'utilisateur doit être extrait;

sélectionner le premier ou deuxième ou troisième ou quatrième ensemble de valeurs, pour obtenir des valeurs extraites du premier ou deuxième ou troisième ou quatrième ensemble de valeurs; et

collecter chaque $S^{ème}$ valeur du premier signal d'utilisateur à partir des valeurs successives du premier ou troisième ensemble de valeurs, ou collecter chaque $S^{ème}$ valeur du deuxième signal d'utilisateur à partir des valeurs successives du deuxième ou quatrième ensemble de valeurs.

29. Programme d'ordinateur ayant un code de programme pour réaliser les procédés selon la revendication 27 ou 28 lorsque le programme est exécuté sur un ordinateur.

FIG 1

First set of carriers

101

First user signal

107

103

First input terminal

Values of the first user signal

[X(1),...,x(n)]

109

y(1)

y(m)

117

Multicarrier modulated signal

Assigner

Multicarrier modulator

105

111

Second input terminal

Values of the second user signal

[Y(1),...,y(m)]

113

x(1)

x(n)

119

Second user signal

115

Second set of carriers

Multicarrier signal

EP 1 665 703 B1

EP 1 665 703 B1

# FIG 2

34

# FIG 3

First user signal

Second user signal

FEC encoder

FEC encoder

Π(1)

Π(S)

Π(1)

Π(S)

QAM/PSK

QAM/PSK

QAM/PSK

QAM/PSK

Πf

S

S

S

S

IFFT

first set of carrier frequencies

second set of carrier frequencies

third set of carrier frequencies

fourth set of carrier frequencies

FIG 4

Channel transfer function

carrier frequency

second set
of carrier
frequencies

First set of carrier
frequencies

FIG 5

$$\bar{x}_3\bar{x}_2\bar{x}_1\bar{x}_0$$

$$\bar{x}_2\bar{x}_1\bar{x}_0\bar{x}_3$$

$$\bar{x}_1\bar{x}_0\bar{x}_3\bar{x}_2$$

FEC encoder

Π

Δ₂

Δₙₜ

GI

FIG 6

GI

Π

FEC decoder

EP 1 665 703 B1

# FIG 7A

## FIG 7B

1 transmit antenna:

$|H(f)|$

$N_s$

$f$

uncoded
error rate

$f$

Cyclic delay diversity:

$|H(f)|$

$N_s$

$f$

uncoded
error rate

$f$

EP 1 665 703 B1

EP 1 665 703 B1

# FIG 8A

Original time domain channel from Tx $n$ to Rx $m$

# FIG 8B

Equivalent SIMO channel model $\Delta_2 = T_s$:

# FIG 8C

Equivalent SIMO channel model $\Delta_2 = 2T_s$:

# FIG 9

FIG 10

# FIG 11

EP 1 665 703 B1

## FIG 12

Means for generating
the first and the
second transmit signal

1211

1203

1205

1217

1209

1219

1207

1215

$\Delta_k$

$\Delta_n$

1213

multicarrier-
modulated
signal

transmit
antennas

second transmit
signal

1201

FIG 13

Means for providing user indication —1319

1313

first set of values

—1317

Received multicarrier modulated signal

Multicarrier demodulator

Selector

selected set of values

1318

1315

Received multicarrier signal

second set of values

EP 1 665 703 B1

# FIG 14

EP 1 665 703 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. DAMMANN ; S. KAISER.** Standard conformable antenna diversity techniques for OFDM systems and its application to the DVB-T system. *IEEE Globecom,* November 2001, 3100-3105
- **A. DAMMANN ; S. KAISER.** Low complex standard conformable antenna diversity techniques for OFDM systems and its application to the DVB-T system. *4th International ITG Conference on Source and Channel Coding,* January 2002, 253-259
- **A. DAMMANN ; R. RAULEFS ; S. KAISER.** Beamforming in combination with space-time diversity for broadband OFDM systems. *IEEE Conference on Communications (ICC,* April 2002, 165-171